(19) Europäisches Patentamt
European Patent Office
Office européen des brevets

(11) **EP 4 624 526 A1**

(12) **EUROPEAN PATENT APPLICATION**

(43) Date of publication:
**01.10.2025 Bulletin 2025/40**

(21) Application number: **24167164.3**

(22) Date of filing: **28.03.2024**

(51) International Patent Classification (IPC):
***C08L 23/12*** (2006.01)     ***C08L 23/14*** (2006.01)

(52) Cooperative Patent Classification (CPC):
(C-Sets available)
**C08L 23/12; C08L 23/142;** C08L 2203/16;
C08L 2205/03; C08L 2207/20          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **ALBUNIA, Alexandra Romina**
**4021 Linz (AT)**
• **DUSCHER, Bernadette**
**4021 Linz (AT)**

• **ZACH, Markus**
**4021 Linz (AT)**
• **KLOPF, Herbert**
**4021 Linz (AT)**
• **ORTNER, Stefan**
**4021 Linz (AT)**
• **BERTHELIER, Anthony**
**92400 Courbevoie (FR)**
• **DENIFL, Peter**
**4021 Linz (AT)**
• **KAYNAK, Baris**
**4021 Linz (AT)**

(74) Representative: **Maiwald GmbH**
**Elisenhof**
**Elisenstraße 3**
**80335 München (DE)**

(54) **RECYCLATE-CONTAINING CAST FILMS**

(57)     A cast film comprising one or more layers, wherein at least one of the one or more layers consists of a polymer composition (PC) that comprises:
a) 0.0 to 80.0 wt.-% of a virgin propylene polymer (v-PP); and
b) 20.0 to 100.0 wt.-% of a mixed-plastic polypropylene blend (B) having an MFR$_2$ of 3.5 to 10.0 g/10 min, wherein the polymeric part of said mixed-plastic polypropylene blend (B) has a C2(total) of 0.0 to 5.0 wt.-%; a CRYSTEX CF content of 93.0 to 100.0 wt.-% and a C2(CF) of 0.0 to 5.0 wt.-%.

Figure 1 – photographs of cast films of CE4, CE5, and IE2, respectively

EP 4 624 526 A1

(52) Cooperative Patent Classification (CPC): (Cont.)

C-Sets
**C08L 23/12, C08L 23/12;**
**C08L 23/12, C08L 23/142;**
**C08L 23/142, C08L 23/12;**
**C08L 23/142, C08L 23/142**

**Description**

**Field of the Invention**

The present invention relates to cast films containing certain high-purity recyclate grades and having a beneficial balance of mechanical and optical properties.

**Background to the Invention**

During the last decade, concern about plastics and the environmental sustainability of their use in current quantities has grown. This has led to new legislation on disposal, collection and recycling of polyolefins. There have additionally been efforts in a number of countries to increase the percentage of plastic materials being recycled instead of being sent to landfill.

In Europe, plastic waste accounts for approximately 27 million tons of waste a year; of this amount in 2016, 7.4 million tons were disposed of in landfill, 11.27 million tons were burnt (in order to produce energy) and around 8.5 million tons were recycled. Polypropylene based materials are a particular problem as these materials are extensively used in packaging. Taking into account the huge amount of waste collected compared to the amount of waste recycled back into the stream (amounting to only about 30%), there is still a great potential for intelligent reuse of plastic waste streams and for mechanical recycling of plastic wastes.

Taking the automobile industry as an example; in Europe the end of life (ELV) directive from the EU states, that 85%/95% of materials from vehicles should be recyclable or recoverable. The present rate of recycling of automobile components is significantly below this target. On average vehicles consist of 9 wt.-% plastics, out of this 9 wt.-% only 3 wt.-% is currently recycled. Therefore, there is still a need to be met if targets for recycling plastics in the automobile industry are to be achieved. This invention particularly focuses on mechanically recycled waste streams as opposed to "energetic recycling" where polyolefins are burnt and used for energy. However, due to cost reasons, poor mechanical properties and inferior processing properties waste streams containing cross-linked polyolefins are often used for energy recovery (e.g. incineration in a district heating plant or for heat generation in the cement industry) and are less often recycled into new products.

One major trend in the field of polyolefins is the use of recycled materials that are derived from a wide variety of sources. Durable goods streams such as those derived from waste electrical equipment (WEE) or end-of-life vehicles (ELV) contain a wide variety of plastics. These materials can be processed to recover acrylonitrile-butadiene-styrene (ABS), high impact polystyrene (HIPS), polypropylene (PP) and polyethylene (PE) plastics. Separation can be carried out using density separation in water and then further separation based on fluorescence, near infrared absorption or Raman fluorescence. However, it is commonly quite difficult to obtain either pure recycled polypropylene or pure recycled polyethylene. Generally, recycled quantities of polypropylene on the market are mixtures of both polypropylene (PP) and polyethylene (PE); this is especially true for post-consumer waste streams. Commercial recyclates from post-consumer waste sources have been found generally to contain mixtures of PP and PE, the minor component reaching up to < 50 wt.-%.

The better the quality, i.e. the higher the purity, of the recycled polyolefin the more expensive the material is. Moreover, recycled polyolefin materials are often cross-contaminated with non-polyolefin materials, such as polyethylene terephthalate, polyamide, and polystyrene or non-polymeric substances like wood, paper, glass or aluminium.

In addition, recycled polypropylene rich materials normally have properties that are much worse than those of the virgin materials, unless the amount of recycled polyolefin added to the final compound is extremely low. For example, such materials often have poor performance in odor and taste, limited stiffness, limited impact strength and poor mechanical properties (such as e.g. brittleness) thus, they do not fulfil customer requirements.

Waste Management 153 (2022) 41-51 describes the production of cast films and biaxially-oriented polypropylene films formed from recyclates. The properties of these films are clearly considerably worse than the comparative virgin grades (see Fig. 4), thus the authors conclude that significant amounts of virgin material would need to be added to these recyclates to provide films with acceptable properties (see section 3.2.2.2). It is further explained that non-polyolefin contamination is significantly detrimental to the performance of films, thus the removal of inorganic residues such as talc and $TiO_2$ is clearly indicated to be the expected route to improving these films. Unfortunately, since such inorganic residues are often present in recyclates due to their use as fillers, it is not straightforward to remove them during mechanical recycling. As such, if a suitable recyclate were to be provided that avoided these known drawbacks, then this would contribute significantly to the application of recyclates in PP-based films. Resources, Conservation & Recycling 200 (2024) 107299 provides an investigation into the recycling of labels derived from PET bottles, concluding that such a process is not industrially viable.

Summary of the Invention

The present invention is based on the observation that certain high purity recyclates can be used in the manufacture of cast films having a surprisingly beneficial balance of mechanical and optical properties, with said high purity recyclates defying the generally understood trends regarding the negative effects of relatively high amounts of inorganic residues.

Thus, the present invention is directed to a cast film comprising one or more layers, wherein at least one of the one or more layers consists of a polymer composition (PC), wherein the polymer composition (PC) comprises:

a) an amount in the range from 0.0 to 80.0 wt.-%, relative to total weight of the polymer composition (PC), of a virgin propylene polymer (v-PP); and

b) an amount in the range from 20.0 to 100.0 wt.-%, relative to total weight of the polymer composition (PC), of a mixed-plastic polypropylene blend (B) having a melt flow rate ($MFR_2$), determined according to ISO 1133 at 230 °C and 2.16 kg, in the range from 3.5 to 10.0 g/10 min, wherein the polymeric part of said mixed-plastic polypropylene blend (B) has:

i) an ethylene content (C2(total)), determined according to CRYSTEX QC analysis, in the range from 0.0 to 5.0 wt.-%;

ii) a crystalline fraction (CF) content, determined according to CRYSTEX QC analysis, in the range from 93.0 to 100.0 wt.-%;

iii) a soluble fraction (SF) content, determined according to CRYSTEX QC analysis, in the range from 0.0 to 7.0 wt.-%; and

iv) an ethylene content of the crystalline fraction (C2(CF)), determined according to CRYSTEX QC analysis, in the range from 0.0 to 5.0 wt.-%.

**Definitions**

Post-consumer waste refers to objects having completed at least a first use cycle (or life cycle), i.e. having already served their first purpose; while industrial waste refers to manufacturing scrap, which does not normally reach a consumer.

Recycling streams may contain both articles for recycling and fragments of articles for recycling, for example flakes. In the context of the present invention, the content of the recycling streams will be referred to as pieces, irrespective of whether these pieces are whole articles, fragments thereof, or flakes thereof. In certain embodiments, the pieces may be flakes, whereas in other embodiments pieces may be larger objects that may be converted into flakes at a later stage.

In the context of the present invention, a mixed plastic recycling stream may be any stream suitable for recycling, wherein polyolefin is present and the stream does not only contain a single polyolefin product, as would be the case, for example, for certain post-industrial waste recycling streams wherein the production waste of a single polyolefin grade, or a single polyolefin-containing article may be the only piece present in the stream. Generally speaking, polyolefin-containing post-consumer waste recycling streams will be mixed plastic recycling streams, as will many polyolefin-containing post-industrial waste recycling streams. A "polyolefin recycling stream" according to the present invention may be a mixed-plastic recycling stream or it may have already undergone a pre-sorting process whereby it has been enriched in a particular type of polyolefin. Alternatively or additionally, the polyolefin recycling stream may have a high purity of one type of polyolefin due to optimized waste collection management, wherein only certain types of waste are collected into a given recycling stream.

The term "article form", as used herein, refers to the shape and form of articles present in a polyolefin recycling stream. Such articles may be present, inter alia, in the form of films, bags, and pouches, which may be considered as flexible articles, and, inter alia, in the form of moulded articles such as food containers, skin-care product containers, and plastic bottles, which may be considered as rigid articles. Commercial optical sorters, such as Tomra Autosort, RTT Steinert Unisort, and Redwave Pellenc, are able to separate so-called rigid articles from so-called flexible articles via their aerodynamic properties (i.e. a stream of gas is typically applied to the stream and those articles being rigid articles will fall with a different arc than flexible articles), converting streams containing such articles into so-called rigid streams and flex streams.

Furthermore, the skilled person would be aware that state of the art sorting processes, such as those involving automated sorters of the type discussed below, do not result in perfect sorting, meaning that any wording such as "wherein the stream contains only a single color" or "wherein the stream contains only a single polyolefin type" are to be interpreted broadly, wherein the streams thus described contain substantially only the stated color or polyolefin type, but are not 100% pure due to technical limitations of the sorting steps.

The person skilled in the art would be aware that pH values of greater than 14.0 and lower than 0.0 are theoretically possible; however, they would also be aware that the determination of such pH values is incredibly difficult using conventional pH probes. As such, in the context of this invention, aqueous solutions having an effective pH of greater than 14.0 are considered to have a pH of 14.0 and aqueous solutions having an effective pH of lower than 0.0 are considered to have a pH of 0.0.

In the context of the present invention, the term "rinse" is used to indicate the addition of a solvent, typically water, which is used to remove foreign material or remaining liquid from the surface of the polyolefin. This can be achieved in very short times, i.e. less than 5 minutes, often less than 1 minute, in contrast to "washing" steps that typically require a longer time, and agitation, to remove adherent foreign material from the surface of the polyolefin and potentially extract volatile organic compounds from the polyolefin.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of elements, this is also to be understood to disclose a group, which preferably consists only of these elements.

Where an indefinite or definite article is used when referring to a singular noun, e.g. "a", "an" or "the", this includes a plural of that noun unless something else is specifically stated.

## Detailed Description

The present invention is directed to a cast film comprising one or more layers, wherein at least one of the one or more layers consists of a polymer composition (PC), wherein the polymer composition (PC) comprises:

   a) an amount in the range from 0.0 to 80.0 wt.-%, relative to total weight of the polymer composition (PC), of a virgin propylene polymer (v-PP); and
   b) an amount in the range from 20.0 to 100.0 wt.-%, relative to total weight of the polymer composition (PC), of a mixed-plastic polypropylene blend (B) having a melt flow rate (MFR$_2$), determined according to ISO 1133 at 230 °C and 2.16 kg, in the range from 3.5 to 10.0 g/10 min, wherein the polymeric part of said mixed-plastic polypropylene blend (B) has:

      i) an ethylene content (C2(total)), determined according to CRYSTEX QC analysis, in the range from 0.0 to 5.0 wt.-%;
      ii) a crystalline fraction (CF) content, determined according to CRYSTEX QC analysis, in the range from 93.0 to 100.0 wt.-%;
      iii) a soluble fraction (SF) content, determined according to CRYSTEX QC analysis, in the range from 0.0 to 7.0 wt.-%; and
      iv) an ethylene content of the crystalline fraction (C2(CF)), determined according to CRYSTEX QC analysis, in the range from 0.0 to 5.0 wt.-%.

**The** polymer composition (PC)

The polymer composition (PC) of the present invention comprises an amount in the range from 0.0 to 80.0 wt.-%, relative to total weight of the polymer composition (PC), of the virgin propylene polymer (v-PP) and an amount in the range from 20.0 to 100.0 wt.-%, relative to total weight of the polymer composition (PC), of the mixed-plastic polypropylene blend (B).

Preferably, the polymer composition (PC) comprises, more preferably consists of:

   a) an amount in the range from 0.0 to 80.0 wt.-%, relative to total weight of the polymer composition (PC), of the virgin propylene polymer (v-PP);
   b) an amount in the range from 20.0 to 100.0 wt.-%, relative to total weight of the polymer composition (PC), of the mixed-plastic polypropylene blend (B);
   c) optionally, an amount in the range from 0.0 to 10.0 wt.-%, relative to total weight of the polymer composition (PC), of further polymeric components (P); and
   d) optionally, an amount in the range from 0.0 to 5.0 wt.-%, relative to total weight of the polymer composition (PC), of additives (A).

Preferably, the polymer composition (PC) comprises, more preferably consists of:

   a) an amount in the range from 0.0 to 70.0 wt.-%, relative to total weight of the polymer composition (PC), of the virgin propylene polymer (v-PP);

b) an amount in the range from 30.0 to 100.0 wt.-%, relative to total weight of the polymer composition (PC), of the mixed-plastic polypropylene blend (B);
c) optionally, an amount in the range from 0.0 to 10.0 wt.-%, relative to total weight of the polymer composition (PC), of further polymeric components (P); and
d) optionally, an amount in the range from 0.0 to 5.0 wt.-%, relative to total weight of the polymer composition (PC), of additives (A).

In some embodiments, the polymer composition (PC) comprises, more preferably consists of:

a) an amount in the range from 0.0 to 80.0 wt.-%, more preferably in the range from 0.0 to 70.0 wt.-%, relative to total weight of the polymer composition (PC), of the virgin propylene polymer (v-PP);
b) an amount in the range from 20.0 to 100.0 wt.-%, more preferably in the range from 30.0 to 100.0 wt.-%, relative to total weight of the polymer composition (PC), of the mixed-plastic polypropylene blend (B).

In some embodiments, the polymer composition (PC) comprises, more preferably consists of:

a) an amount in the range from 0.0 to 80.0 wt.-%, more preferably in the range from 0.0 to 70.0 wt.-%, relative to total weight of the polymer composition (PC), of the virgin propylene polymer (v-PP);
b) an amount in the range from 20.0 to 100.0 wt.-%, more preferably in the range from 30.0 to 100.0 wt.-%, relative to total weight of the polymer composition (PC), of the mixed-plastic polypropylene blend (B);
c) an amount in the range from 0.0 to 10.0 wt.-%, more preferably in the range from 0.1 to 5.0 wt.-%, relative to total weight of the polymer composition (PC), of further polymeric components (P).

In some embodiments, the polymer composition (PC) comprises, more preferably consists of:

a) an amount in the range from 0.0 to 80.0 wt.-%, more preferably in the range from 0.0 to 70.0 wt.-%, relative to total weight of the polymer composition (PC), of the virgin propylene polymer (v-PP);
b) an amount in the range from 20.0 to 100.0 wt.-%, more preferably in the range from 30.0 to 100.0 wt.-%, relative to total weight of the polymer composition (PC), of the mixed-plastic polypropylene blend (B); and
c) an amount in the range from 0.0 to 5.0 wt.-%, relative to total weight of the polymer composition (PC), of additives (A).

In some embodiments, the polymer composition (PC) comprises, more preferably consists of:

a) an amount in the range from 0.0 to 80.0 wt.-%, more preferably in the range from 0.0 to 70.0 wt.-%, relative to total weight of the polymer composition (PC), of the virgin propylene polymer (v-PP);
b) an amount in the range from 20.0 to 100.0 wt.-%, more preferably in the range from 30.0 to 100.0 wt.-%, relative to total weight of the polymer composition (PC), of the mixed-plastic polypropylene blend (B);
c) an amount in the range from 0.0 to 10.0 wt.-%, more preferably in the range from 0.1 to 5.0 wt.-%, relative to total weight of the polymer composition (PC), of further polymeric components (P); and
d) an amount in the range from 0.0 to 5.0 wt.-%, relative to total weight of the polymer composition (PC), of additives (A).

It is preferred that the combined amounts of the virgin propylene polymer (v-PP) and the mixed-plastic polypropylene blend (B) add up to at least 85 wt.-%, more preferably at least 90 wt.-%, yet more preferably at least 95 wt.-%, relative to the total weight of the polymer composition (PC).
It is also preferred that the combined amounts of the virgin propylene polymer (v-PP) and the mixed-plastic polypropylene blend (B), the optional further polymeric components (P), and the optional additives (A) add up to at least 90 wt.-%, more preferably at least 95 wt.-%, yet more preferably at least 98 wt.-%, relative to the total weight of the polymer composition (PC). Most preferably, the polymer composition (PC) consists of the virgin propylene polymer (v-PP) and the mixed-plastic polypropylene blend (B), the optional further polymeric components (P), and the optional additives (A).
It is also preferred that the polymer composition (PC) has a content of inorganic residues (ash residue), determined by thermogravimetric analysis (TGA), in the range from 0.10 to 7.5 wt.-%, relative to the total weight of the polymer composition (PC), more preferably in the range from 0.30 to 5.0 wt.-%, most preferably in the range from 0.50 to 4.0 wt.-%.
In certain embodiments, the polymer composition (PC) has a content of inorganic residues (ash residue), determined by thermogravimetric analysis (TGA), in the range from 0.10 to 7.5 wt.-%, relative to the total weight of polymer composition (PC), more preferably in the range from 1.0 to 5.0 wt.-%, most preferably in the range from 2.0 to 4.0 wt.-%.

It is preferred that the polymer composition (PC) has a Flexural Modulus, determined according to ISO 178 on $80 \times 10 \times 4mm^3$ injection-moulded specimens prepared according to ISO 19069-2, in the range from 1200 to 1800 MPa.

It is preferred that the polymer composition (PC) has a total luminous transmittance, determined according to ASTM D1003 on a 50 μm cast film specimen, in the range from 70 to 100%, more preferably in the range from 75 to 100%, most preferably in the range from 80 to 100%.

It is preferred that the polymer composition (PC) has a clarity value, determined according to ASTM D1003 on a 50 μm cast film specimen, in the range from 40 to 80%, more preferably in the range from 43 to 70%, most preferably in the range from 45 to 60%.

It is preferred that the polymer composition (PC) has a haze value, determined according to ASTM D1003 on a 50 μm cast film specimen, in the range from 20 to 80%, more preferably in the range from 30 to 70%, most preferably in the range from 40 to 60%.

It is preferred that the polymer composition (PC) has a gloss value at 45 ° in the machine direction (MD), determined according to ASTM D2457 on a 50 μm cast film specimen, in the range from 20.0 to 35.0, more preferably in the range from 23.0 to 30.0, most preferably in the range from 25.0 to 28.0.

It is preferred that the polymer composition (PC) has a gloss value at 45 ° in the transverse direction (TD), determined according to ASTM D2457 on a 50 μm cast film specimen, in the range from 18.0 to 30.0, more preferably in the range from 20.0 to 28.0, most preferably in the range from 22.0 to 25.0.

It is preferred that the polymer composition (PC) has a Tensile Modulus, determined according to ISO 527-3 on a 50 μm cast film specimen in the machine direction (MD), in the range from 500 to 1000 MPa, more preferably in the range from 600 to 800 MPa, most preferably in the range from 620 to 700 MPa.

It is preferred that the polymer composition (PC) has a Tensile Modulus, determined according to ISO 527-3 on a 50 μm cast film specimen in the transverse direction (TD), in the range from 450 to 1000 MPa, more preferably in the range from 500 to 800 MPa, most preferably in the range from 520 to 650 MPa.

It is preferred that the polymer composition (PC) has a tensile stress at break, determined according to ISO 527-3 on a 50 μm cast film specimen in the machine direction (MD), in the range from 30 to 70 MPa, more preferably in the range from 35 to 60 MPa, most preferably in the range from 40 to 55 MPa.

It is preferred that the polymer composition (PC) has a tensile stress at break, determined according to ISO 527-3 on a 50 μm cast film specimen in the transverse direction (TD), in the range from 12 to 50 MPa, more preferably in the range from 20 to 40 MPa, most preferably in the range from 25 to 35 MPa

It is preferred that the polymer composition (PC) has a tensile strain at break, determined according to ISO 527-3 on a 50 μm cast film specimen in the machine direction (MD), in the range from 400 to 800%, more preferably in the range from 500 to 700%, most preferably in the range from 580 to 650%.

It is preferred that the polymer composition (PC) has a tensile strain at break, determined according to ISO 527-3 on a 50 μm cast film specimen in the transverse direction (TD), in the range from 400 to 800%, more preferably in the range from 500 to 700%, most preferably in the range from 550 to 630%.

It is preferred that the polymer composition (PC) has a tensile stress at yield, determined according to ISO 527-3 on a 50 μm cast film specimen in the machine direction (MD), in the range from 10 to 30 MPa, more preferably in the range from 12 to 25 MPa, most preferably in the range from 13 to 20 MPa.

It is preferred that the polymer composition (PC) has a tensile stress at yield, determined according to ISO 527-3 on a 50 μm cast film specimen in the transverse direction (TD), in the range from 10 to 30 MPa, more preferably in the range from 12 to 25 MPa, most preferably in the range from 12 to 20 MPa.

It is preferred that the polymer composition (PC) has a tensile strain at yield, determined according to ISO 527-3 on a 50 μm cast film specimen in the machine direction (MD), in the range from 6.0 to 10.0%, more preferably in the range from 7.0 to 9.5%, most preferably in the range from 7.5 to 9.0%.

It is preferred that the polymer composition (PC) has a tensile strain at yield, determined according to ISO 527-3 on a 50 μm cast film specimen in the transverse direction (TD), in the range from 5.0 to 10.0%, more preferably in the range from 6.0 to 9.0%, most preferably in the range from 6.5 to 8.0%.

It is a surprising finding of the present invention that the inventive recyclate-containing cast films have comparable mechanical properties to comparative recyclate-containing cast films, despite the presence of higher amounts of inorganic residues, as well as improved optical properties, which is particularly surprising.

As such, it is particularly preferred that:

a) the polymer composition (PC) has a content of inorganic residues (ash residue), determined by thermogravimetric analysis (TGA), in the range from 0.10 to 7.5 wt.-%, relative to the total weight of the polymer composition (PC), more preferably in the range from 1.0 to 5.0 wt.-%, most preferably in the range from 2.0 to 4.0 wt.-%; and
b) the polymer composition (PC) has a haze value, determined according to ASTM D1003 on a 50 μm cast film specimen, in the range from 20 to 80%, more preferably in the range from 30 to 70%, most preferably in the range from 40 to 60%.

The virgin propylene polymer (v-PP)

In its broadest form, the virgin propylene polymer (v-PP) may be any propylene polymer. The term "virgin" denotes that the virgin propylene polymer (v-PP) has not been used for another application and then recycled, in contrast to the mixed-plastic polypropylene blend (B).

The virgin propylene polymer (v-PP) is preferably a propylene homopolymer (h-PP), a propylene random copolymer (r-PP), or a heterophasic propylene copolymer (HECO).

In each of these embodiments, the melt flow rate (MFR$_2$), determined according to ISO 1133 at 230 °C and 2.16 kg, is preferably in the range from 1.0 to 10.0 g/10 min, more preferably in the range from 2.0 to 9.0 g/10 min, most preferably in the range from 3.0 to 8.0 g/10 min.

It is preferred that the virgin propylene polymer (v-PP) is a propylene homopolymer (h-PP) or a heterophasic propylene copolymer (HECO).

It is particularly preferred that the virgin propylene polymer (v-PP) is a propylene homopolymer (h-PP) or a heterophasic propylene copolymer (HECO), yet more preferably a heterophasic propylene-ethylene copolymer (HECO).

The heterophasic propylene-ethylene copolymer (HECO) may be characterized according to the CRYSTEX QC method using trichlorobenzene (TCB) as a solvent. This method is described below in the determination methods section. In some cases, this method results in more useful data (than for example xylene cold soluble-based methods), since the crystalline fraction (CF) and the soluble fraction (SF) more accurately correspond to the matrix and elastomeric phases of heterophasic propylene ethylene copolymers respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase (i.e. CF or XCI) and elastomeric phase (i.e. SF or XCS) can differ as well as the properties thereof.

CRYSTEX QC analysis quantifies the properties of the soluble fraction (SF) and crystalline fraction (CF) of the polymeric part of the heterophasic propylene-ethylene copolymer (HECO), thus any non-polymeric components, for example talc and titanium dioxide, are not considered.

It is preferred that the heterophasic propylene-ethylene copolymer (HECO) has a soluble fraction (SF) content, determined according to CRYSTEX QC analysis, in the range from 10.0 to 25.0 wt.-%, more preferably in the range from 11.0 to 20.0 wt.-% most preferably in the range from 12.0 to 18.0 wt.-%. It is preferred that the heterophasic propylene-ethylene copolymer (HECO) has a crystalline fraction (CF) content, determined according to CRYSTEX QC analysis, in the range from 75.0 to 90.0 wt.-%, more preferably in the range from 80.0 to 89.0 wt.-% most preferably in the range from 82.0 to 88.0 wt.-%.

It is preferred that the heterophasic propylene-ethylene copolymer (HECO) has an ethylene content (C2(total)), determined according to CRYSTEX QC analysis, in the range from 4.0 to 10.0 wt.-%, more preferably in the range from 5.0 to 9.0 wt.-% most preferably in the range from 6.0 to 8.0 wt.-%.

It is preferred that the heterophasic propylene-ethylene copolymer (HECO) has an ethylene content of the crystalline fraction (C2(CF)), determined according to CRYSTEX QC analysis, in the range from 1.0 to 5.0 wt.-%, more preferably in the range from 1.5 to 4.5 wt.-% most preferably in the range from 2.0 to 4.0 wt.-%.

It is preferred that the heterophasic propylene-ethylene copolymer (HECO) has an ethylene content of the soluble fraction (C2(SF)), determined according to CRYSTEX QC analysis, in the range from 20.0 to 40.0 wt.-%, more preferably in the range from 25.0 to 37.0 wt.-% most preferably in the range from 30.0 to 35.0 wt.-%.

It is preferred that the heterophasic propylene-ethylene copolymer (HECO) has intrinsic viscosity (iV(total)), determined according to CRYSTEX QC analysis, in the range from 1.20 to 3.00 dL/g, more preferably in the range from 1.50 to 2.70 dL/g, most preferably in the range from 1.80 to 2.40 dL/g.

It is preferred that the heterophasic propylene-ethylene copolymer (HECO) has an intrinsic viscosity of the crystalline fraction (iV(CF)), determined according to CRYSTEX QC analysis, in the range from 1.20 to 3.00 dL/g, more preferably in the range from 1.50 to 2.70 dL/g, most preferably in the range from 1.80 to 2.40 dL/g.

It is preferred that the heterophasic propylene-ethylene copolymer (HECO) has an intrinsic viscosity of the soluble fraction (iV(SF)), determined according to CRYSTEX QC analysis, in the range from 1.00 to 2.50 dL/g, more preferably in the range from 1.20 to 2.20 dL/g, most preferably in the range from 1.40 to 2.00 dL/g.

The mixed-plastic polypropylene blend (B)

In the context of the present invention, the term mixed-plastic polypropylene blend means that more than one polymer grade is present, thereby forming a blend. This blend need not contain polymers other than polypropylene, with blends comprising only polypropylene fractions constituting a mixed-plastic polypropylene blend according to the present invention, which derives at least in part from recycled material. Such mixed-plastic polypropylene blends are typically formed from many different virgin grades that are collected together during a recycling process, thus it would be straightforward for the person skilled in the art to differentiate such mixed-plastic polypropylene blends from virgin grades, which have a well-defined modality, such as unimodal, bimodal etc..

Preferably, the polypropylene rich recycled material is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE) etc. Non-exhaustive examples of polypropylene rich recycled materials include: Purpolen®PP (Mtm Plastics GmbH), Axpoly® recycled polypropylene pellets (Axion Ltd) and PolyPropylene Copolymer (BSP Compounds).

During recycling, any reasonable measure will usually be taken for any components other than polyethylene and polypropylene to be reduced/removed as far as the final application or use suggests such measures; however, other components are often present in small amounts.

As such, it is preferred that at least 90 wt.-%, more preferably at least 95 wt.-%, yet more preferably at least 98 wt.-% of the mixed-plastic polypropylene blend (B) derives from recycled material.

It is particularly preferred that the recycled material is at least 85 wt.-% derived from polypropylene-containing labels.

It is especially preferred that the mixed-plastic polypropylene blend (B) is obtainable by, more preferably produced by, a mechanical polypropylene recycling process comprising, in the given order, the steps of:

a) providing a precursor polypropylene recycling stream (A) that contains at least 85 wt.-% of polypropylene-containing labels, based on the total weight of the precursor polypropylene recycling stream (A);

b) optionally sorting the precursor polypropylene recycling stream (A) by polymer type, thereby removing any pieces that contain polymers other than polypropylene, thereby generating a purified polypropylene recycling stream (B);

c) washing the purified polypropylene recycling stream (B) or, in the case that step b) is absent, the precursor polypropylene recycling stream (A), in one or more washing steps, thereby obtaining a washed polypropylene stream (C);

d) optionally separating the washed polypropylene stream (C) into a heavy fraction and a light fraction polypropylene recycling stream (D);

e) melt extruding, preferably pelletizing, the light fraction polypropylene recycling stream (D) or, in the case that step d) is absent, the washed polypropylene stream (C), preferably wherein additives (Ad) are added in the melt state, to form an extruded, preferably pelletized, recycled polypropylene composition (E); and

f) optionally aerating the recycled polypropylene composition (E) to remove volatile organic compounds, thereby generating an aerated extruded recycled polypropylene product (F1); wherein the order of steps f) and e) can be interchanged, such that the light fraction polypropylene recycling stream (D) or, in the case that step d) is absent, the washed polypropylene stream (C) is first aerated to form aerated recycled polypropylene flakes (F2) that are subsequently extruded, preferably wherein additives (Ad) are added in the melt state, to form an extruded, preferably pelletized, aerated recycled polypropylene product (F3).

This process is described in more detail in EP 23 200 103.2.

The mixed-plastic polypropylene blend (B) has a melt flow rate (MFR$_2$), determined according to ISO 1133 at 230 °C and 2.16 kg, in the range from 3.5 to 10.0 g/10 min, more preferably in the range from 4.0 to 8.0 g/10 min, most preferably in the range from 5.0 to 7.0 g/10 min.

The mixed-plastic polypropylene blend (B) may be characterized according to the CRYSTEX QC method using trichlorobenzene (TCB) as a solvent. This method is described below in the determination methods section. In some cases, this method results in more useful data (than for example xylene cold soluble-based methods), since the crystalline fraction (CF) and the soluble fraction (SF) more accurately correspond to the matrix and elastomeric phases of heterophasic propylene ethylene copolymers respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase (i.e. CF or XCI) and elastomeric phase (i.e. SF or XCS) can differ as well as the properties thereof.

CRYSTEX QC analysis quantifies the properties of the soluble fraction (SF) and crystalline fraction (CF) of the polymeric part of the mixed-plastic polypropylene blend (B), thus any non-polymeric components, such as talc and titanium dioxide, are not considered.

The polymeric part of the mixed-plastic polypropylene blend (B) has an ethylene content (C2(total)), determined according to CRYSTEX QC analysis, in the range from 0.0 to 5.0 wt.-%, more preferably in the range from 0.0 to 4.0 wt.-%, most preferably in the range from 0.0 to 3.5 wt.-%.

The polymeric part of the mixed-plastic polypropylene blend (B) also has a crystalline fraction (CF) content, determined according to CRYSTEX QC analysis, in the range from 93.0 to 100.0 wt.-%, more preferably in the range from 93.5 to 99.0 wt.-%, most preferably in the range from 94.0 to 99.0 wt.-%.

The polymeric part of the mixed-plastic polypropylene blend (B) also has a soluble fraction (SF) content, determined according to CRYSTEX QC analysis, in the range from 0.0 to 7.0 wt.-%, more preferably in the range from 1.0 to 6.5 wt.-%, most preferably in the range from 1.0 to 6.0 wt.-%.

The polymeric part of the mixed-plastic polypropylene blend (B) also has an ethylene content of the crystalline fraction (C2(CF)), determined according to CRYSTEX QC analysis, in the range from 0.0 to 5.0 wt.-%, more preferably in the range from 0.0 to 4.0 wt.-%, most preferably in the range from 0.0 to 3.5 wt.-%.

The polymeric part of the mixed-plastic polypropylene blend (B) preferably has an intrinsic viscosity of the crystalline fraction (iV(CF)), determined according to CRYSTEX QC analysis, in the range from 1.90 to 2.20 dL/g more preferably in the range from 1.95 to 2.15 dL/g, most preferably in the range from 2.00 to 2.10 dL/g.

As mentioned above, the mixed-plastic polypropylene blend (B) derives at least in part from recycled material. Preferably, at least 90 wt.-%, more preferably at least 95 wt.-%, yet more preferably at least 98 wt.-% of the mixed-plastic polypropylene blend (B) derives from recycled material.

If virgin polymers are present, it is preferred that these polymers are masterbatch carrier polymers used to introduce additives during compounding.

The mixed-plastic polypropylene blend (B) according to embodiments of the present invention furthermore has a distinctive light grey coloring, primarily resulting from the combination of traces of ink that may have not been 100% removed during the recycling process. The more efficient the washing process, the less pronounced this grey coloring will be (i.e. the whiter the mixed-plastic polypropylene blend (B) will be). Other non-polypropylene components can also contribute to greying effect, either directly or by forming degradation products that contribute to the greying effect.

The mixed-plastic polypropylene blend (B) thus preferably has a CIELAB color space (L*a*b), determined according to ISO 11664-4, of:

    i) L* of from 50.0 to 90.0, more preferably from 50.0 to 85.0;
    ii) a* of from -5.0 to 0.0; and
    iii) b* of from 0.0 to 25.0.

Such a CIELAB color space is typical for especially pure recyclates (i.e. being whiter than normal recyclates, but less white than white virgin polymer grades).

Whilst it is possible to obtain virgin grades having a color within this CIELAB color space, this would generally be obtained by the addition of small amounts of black pigment, such as carbon black, to a white polymer grade, meaning that the virgin grade would contain only white and black pigments.

In the mixed-plastic polypropylene blend (B) of the present invention, the grey coloring does not result from the addition of black pigments, but rather traces of various colors of ink. Whilst the typical black pigments contain carbon (i.e. carbon black) and the white pigments contain, for example, titanium (in titanium dioxide), the mixed inks will contain a wide array of different elements that can be detected by X-ray fluorescence spectroscopy (XRF). The same wide array of different elements is not detected in otherwise equivalent grey virgin materials.

As such, the observation of the following elements via XRF analysis is indicative of the recycling origin of the mixed-plastic polypropylene blend (B). For the following XRF elemental contents, the use of the term "preferably" does not infer that higher amounts of the elements in question are desirable, but rather than the "more preferable" and "most preferable" embodiments more precisely define the recycling origin of the mixed-plastic polypropylene blend (B).

As such, it is preferred that the mixed-plastic polypropylene blend (B) has an aluminium (Al) content, determined by X-ray fluorescence spectroscopy (XRF), of at least 60 ppm, more preferably of at least 90 ppm, most preferably of at least 120 ppm.

It is further preferred that the mixed-plastic polypropylene blend (B) has an iron (Fe) content, determined by X-ray fluorescence spectroscopy (XRF), of at least 30 ppm, more preferably of at least 50 ppm, most preferably of at least 80 ppm.

It is further preferred that the mixed-plastic polypropylene blend (B) has a sodium (Na) content, determined by X-ray fluorescence spectroscopy (XRF), of at least 30 ppm, more preferably of at least 50 ppm, most preferably of at least 80 ppm.

It is further preferred that the mixed-plastic polypropylene blend (B) has a sulphur (S) content, determined by X-ray fluorescence spectroscopy (XRF), of at least 5 ppm, more preferably of at least 15 ppm, most preferably of at least 30 ppm.

It is further preferred that the mixed-plastic polypropylene blend (B) has a zinc (Zn) content, determined by X-ray fluorescence spectroscopy (XRF), of at least 25 ppm, more preferably of at least 40 ppm, most preferably of at least 45 ppm.

It is particularly preferred that the mixed-plastic polypropylene blend (B) has at least three of, more preferably all of, the following properties:

    a) an iron (Fe) content, determined by X-ray fluorescence spectroscopy (XRF), of at least 30 ppm;

b) a sodium (Na) content, determined by X-ray fluorescence spectroscopy (XRF), of at least 30 ppm; and

c) a sulphur (S) content, determined by X-ray fluorescence spectroscopy (XRF), of at least 5 ppm

d) a zinc (Zn) content, determined by X-ray fluorescence spectroscopy (XRF), of at least 25 ppm.

Such combinations of Fe, Na, S and/or Zn are not observed in virgin grades. As such, the presence of these elements is indicative of the recyclate nature of the mixed-plastic polypropylene blend (B), especially in combination with the CIELAB color space described above.

It is especially preferred that the sum of the iron (Fe) content, the sodium (Na) content, the sulphur (S) content, and the zinc (Zn) content, each determined by X-ray fluorescence spectroscopy (XRF), is at least 100 ppm, more preferably at least 200 ppm, most preferably at least 400 ppm.

Likewise, the presence of Al in such high amounts is a clear indication of the recyclate nature of the mixed-plastic polypropylene blend (B), particularly of recyclates deriving from labels.

It is further preferred that the mixed-plastic polypropylene blend (B) has a bromine (Br) content, determined by X-ray fluorescence spectroscopy (XRF), of at least 0.5 ppm, more preferably of at least 1.0 ppm, most preferably of at least 2.0 ppm.

It is further preferred that the mixed-plastic polypropylene blend (B) has a potassium (K) content, determined by X-ray fluorescence spectroscopy (XRF), of at least 1 ppm, more preferably of at least 10 ppm, most preferably of at least 20 ppm.

It is further preferred that the mixed-plastic polypropylene blend (B) has a strontium (Sr) content, determined by X-ray fluorescence spectroscopy (XRF), of at least 1 ppm, more preferably of at least 5 ppm, most preferably of at least 10 ppm.

It is further preferred that the mixed-plastic polypropylene blend (B) has a calcium (Ca) content, determined by X-ray fluorescence spectroscopy (XRF), of at least 200 ppm, more preferably of at least 500 ppm, most preferably of at least 800 ppm.

It is further preferred that the mixed-plastic polypropylene blend (B) has a chlorine (Cl) content, determined by X-ray fluorescence spectroscopy (XRF), of at least 25 ppm, more preferably of at least 35 ppm, most preferably of at least 40 ppm.

It is further preferred that the mixed-plastic polypropylene blend (B) has a titanium (Ti) content, determined by X-ray fluorescence spectroscopy (XRF), of at least 600 ppm, more preferably of at least 800 ppm, most preferably of at least 1000 ppm.

It is further preferred that the mixed-plastic polypropylene blend (B) has a magnesium (Mg) content, determined by X-ray fluorescence spectroscopy (XRF), of at least 50 ppm, more preferably of at least 80 ppm, most preferably of at least 90 ppm.

It is further preferred that the mixed-plastic polypropylene blend (B) has a silicon (Si) content, determined by X-ray fluorescence spectroscopy (XRF), of at least 50 ppm, more preferably of at least 100 ppm, most preferably of at least 120 ppm.

Another indicator of the recyclate nature of the mixed-plastic polypropylene blend (B) may be obtained from measuring the phosphorus (P) content.

The presence of phosphorus in polymer grades is almost 100% attributable to phosphorus-based stabilizers, such as antioxidants. The content of such additives in a virgin grade is very consistent across almost all commercially available grades, corresponding to the amount required to sufficiently stabilize the polymer grade for the anticipated number of compounding steps (given that it is typically during these high temperature compounding steps that oxidation is most likely to occur) without incurring unnecessary costs by using too much stabilizer. By the time that a consumer article is recycled, the stabilizers will be largely used up (i.e. they will have been oxidized, preventing further use as an antioxidant) and further phosphorus-based stabilizers will need to be added to stabilize the recyclate grade, meaning that in recyclates the phosphorus present will either a) be at a typical level for a virgin grade, but be predominantly oxidized, or b) will be at a significantly higher level than would be typical for a virgin grade.

The total phosphorus content can be analysed by X-ray fluorescence spectroscopy (XRF), whilst the ratio of non-oxidized stabilizer (tris (2,4-di-tert-butylphenyl)phosphite) and oxidized stabilizer (tris (2,4-di-tert-butylphenyl)phosphate) can be evaluated by HPLC analysis.

As such it is preferred that the content of tris (2,4-di-tert-butylphenyl)phosphate expressed relative to the total content of tris (2,4-di-tert-butylphenyl)phosphite and tris (2,4-di-tert-butylphenyl)phosphate, as determined by HPLC analysis, is in the range from 60% to 100% and the total phosphorus content, as determined by X-ray fluorescence spectroscopy (XRF), is in the range from 15 to 60 ppm.

This would be consistent with a recyclate grade that has not been further additivated.

Alternatively, it is preferred that the total phosphorus content, as determined by X-ray fluorescence spectroscopy (XRF), is greater than 60 ppm.

This would be consistent with a recyclate grade that has been further additivated with an additional source of phosphorus.

It is also preferred that the mixed-plastic polypropylene blend (B) has a content of inorganic residues (ash residue), determined by thermogravimetric analysis (TGA), in the range from 0.10 to 7.5 wt.-%, relative to the total weight of the mixed-plastic polypropylene blend (B), more preferably in the range from 1.0 to 5.0 wt.-%, most preferably in the range from 2.0 to 4.0 wt.-%.

The mixed-plastic polypropylene blend (B) preferably has a total volume of organic compounds (TVOC), determined according to the measurement given in the determination methods, in the range from 0 to 25 $\mu$g/g, more preferably in the range from 0 to 18 $\mu$g/g, most preferably in the range from 0 to 15 $\mu$g/g.

The mixed-plastic polypropylene blend (B) preferably has a total combined defect index value, determined according to the method given in the determination methods, in the range from 4,000 to 35,000, more preferably in the range from 8,000 to 30,000, most preferably in the range from 10,000 to 25,000.

The mixed-plastic polypropylene blend (B) preferably has a combined defect number, determined according to the method given in the determination methods, in the range from 20,000 to 200,000, more preferably in the range from 30,000 to 180,000, most preferably in the range from 40,000 to 150,000.

The mixed-plastic polypropylene blend (B) preferably has a content of particulate contaminants having a density of at least 1.10 g/cm$^3$, determined according to X-ray computed tomography, in the range from 0.10 to 0.60 vol-%, more preferably in the range from 0.20 to 0.55 vol-%, most preferably in the range from 0.30 to 0.50 vol-%.

The mixed-plastic polypropylene blend (B) preferably has a content of particulate contaminants having a density of at least 1.10 g/cm$^3$ and a size of greater than 50 $\mu$m, determined according to X-ray computed tomography, in the range from 0.05 to 0.20 vol-%, more preferably in the range from 0.07 to 0.18 vol-%, most preferably in the range from 0.09 to 0.15 vol-%.

The mixed-plastic polypropylene blend (B) preferably has a content of particulate contaminants having a density in the range from 1.10 to 1.53 g/cm$^3$, determined according to X-ray computed tomography, in the range from 0.10 to 0.35 vol-%, more preferably in the range from 0.12 to 0.28 vol-%, most preferably in the range from 0.15 to 0.20 vol-%.

The mixed-plastic polypropylene blend (B) preferably has a content of particulate contaminants having a density in the range from 1.10 to 1.53 g/cm$^3$ and a size of greater than 50 $\mu$m, determined according to X-ray computed tomography, in the range from 0.01 to 0.12 vol-%, more preferably in the range from 0.02 to 0.09 vol-%, most preferably in the range from 0.03 to 0.06 vol-%.

**Further polymeric components (P)**

In addition to the virgin propylene polymer and the mixed-plastic polypropylene blend, the polymer composition (PC) may also comprise small amounts of further polymeric components (P).

The identity of these further polymeric components (P) is not limited. Suitable further polymeric components may include further polyethylene(s) and/or polypropylene(s).

Any masterbatch carrier polymers used to introduce additives are assigned to the total content of one or more additives (A), as discussed below.

It is preferred that any further polymeric components (P) are present in a small amount, such as 10.0 wt.-% or less, relative to the total weight of the polymer composition, ensuring that the majority of the polymer content in the polymer composition (PC) derives from the mixed-plastic polypropylene blend (B) and/or the virgin propylene polymer (v-PP).

**One or more additives (A)**

Another optional component of the polymer composition (PC) is one or more additives (A).

If present, the one or more additives (A) are provided in an amount in the range from 0.0 to 5.0 wt.-%, relative to the total weight of the polymer composition (PC).

The selection of suitable additives for the polymer composition (PC) is within the general knowledge of the person skilled in the art.

For example, the one or more additives (A) may be selected from the group consisting of antioxidants, stabilizers, fillers, nucleating agents, and antistatic agents.

Such additives are generally commercially available and are described, for example, in "Plastic Additives Handbook", pages 871 to 873, 5th edition, 2001 of Hans Zweifel.

It is understood that the content of additives (A), given with respect to the total weight of the polymer composition (PC), includes any carrier polymers used to introduce the additives to said polymer composition (PC), i.e. masterbatch carrier polymers. An example of such a carrier polymer would be a polypropylene homopolymer in the form of powder.

**Cast film**

The cast films according to the present invention comprise one or more layers, wherein at least one of the one or more layers consists of the polymer composition (PC).

In one embodiment, the cast film is a monolayer film, wherein said monolayer film consists of the polymer composition (PC).

In an alternative embodiment, the cast film is a multilayer film, in particular a 3-layer film.

If the cast film is a 3-layer film, then it is preferred that the core layer consists of the polymer composition (PC).

If the cast film is a multilayer film, then at least one layer must consist of the polymer composition (PC). The remaining layer(s) may also comprise the polymer composition (PC) of the invention or may comprise polymer compositions other than the polymer composition (PC) of the invention.

The cast film preferably has a thickness in the range from 10 to 200 μm, more preferably in the range from 20 to 100 μm, most preferably in the range from 30 to 80 μm.

The cast film preferably has a total luminous transmittance, determined according to ASTM D1003, in the range from 70 to 100%, more preferably in the range from 75 to 100%, most preferably in the range from 80 to 100%.

The cast film preferably has a clarity value, determined according to ASTM D1003, in the range from 40 to 80%, more preferably in the range from 43 to 70%, most preferably in the range from 45 to 60%.

The cast film preferably has a haze value, determined according to ASTM D1003, in the range from 20 to 80%, more preferably in the range from 30 to 70%, most preferably in the range from 40 to 60%.

The cast film preferably has a gloss value at 45 ° in the machine direction (MD), determined according to ASTM D2457, in the range from 20.0 to 35.0, more preferably in the range from 23.0 to 30.0, most preferably in the range from 25.0 to 28.0.

The cast film preferably has a gloss value at 45 ° in the transverse direction (TD), determined according to ASTM D2457, in the range from 18.0 to 30.0, more preferably in the range from 20.0 to 28.0, most preferably in the range from 22.0 to 25.0.

The cast film preferably has a Tensile Modulus, determined according to ISO 527-3 in the machine direction (MD), in the range from 500 to 1000 MPa, more preferably in the range from 600 to 800 MPa, most preferably in the range from 620 to 700 MPa.

The cast film preferably has a Tensile Modulus, determined according to ISO 527-3 in the transverse direction (TD), in the range from 450 to 1000 MPa, more preferably in the range from 500 to 800 MPa, most preferably in the range from 520 to 650 MPa.

The cast film preferably has a tensile stress at break, determined according to ISO 527-3 in the machine direction (MD), in the range from 30 to 70 MPa, more preferably in the range from 35 to 60 MPa, most preferably in the range from 40 to 55 MPa.

The cast film preferably has a tensile stress at break, determined according to ISO 527-3 in the transverse direction (TD), in the range from 12 to 50 MPa, more preferably in the range from 20 to 40 MPa, most preferably in the range from 25 to 35 MPa.

The cast film preferably has a tensile strain at break, determined according to ISO 527-3 in the machine direction (MD), in the range from 400 to 800%, more preferably in the range from 500 to 700%, most preferably in the range from 580 to 650%.

The cast film preferably has a tensile strain at break, determined according to ISO 527-3 in the transverse direction (TD), in the range from 400 to 800%, more preferably in the range from 500 to 700%, most preferably in the range from 550 to 630%.

The cast film preferably has a tensile stress at yield, determined according to ISO 527-3 in the machine direction (MD), in the range from 10 to 30 MPa, more preferably in the range from 12 to 25 MPa, most preferably in the range from 13 to 20 MPa.

The cast film preferably has a tensile stress at yield, determined according to ISO 527-3 in the transverse direction (TD), in the range from 10 to 30 MPa, more preferably in the range from 12 to 25 MPa, most preferably in the range from 12 to 20 MPa.

The cast film preferably has a tensile strain at yield, determined according to ISO 527-3 in the machine direction (MD), in the range from 6.0 to 10.0%, more preferably in the range from 7.0 to 9.5%, most preferably in the range from 7.5 to 9.0%.

The cast film preferably has a tensile strain at yield, determined according to ISO 527-3 in the transverse direction (TD), in the range from 5.0 to 10.0%, more preferably in the range from 6.0 to 9.0%, most preferably in the range from 6.5 to 8.0%.

It is a surprising finding of the present invention that the inventive recyclate-containing cast films have comparable mechanical properties to comparative recyclate-containing cast films, despite the presence of higher amounts of inorganic residues, as well as improved optical properties, which is particularly surprising.

As such, it is particularly preferred that:

a) the polymer composition (PC) has a content of inorganic residues (ash residue), determined by thermogravimetric analysis (TGA), in the range from 1.0 to 5.0 wt.-%, relative to the total weight of the polymer composition (PC), most preferably in the range from 2.0 to 4.0 wt.-%;
b) the cast film has a thickness in the range from 20 to 100 $\mu$m, most preferably in the range from 30 to 80 $\mu$m; and
c) the cast film has a haze value, determined according to ASTM D1003, in the range from 20 to 80%, more preferably in the range from 30 to 70%, most preferably in the range from 40 to 60%.

## EXAMPLES

### 1. Determination methods

The following definitions of terms and determination methods apply for the above general description of the invention including the claims as well as to the below examples unless otherwise defined.

### CRYSTEX QC analysis

#### *Crystalline and soluble fractions method*

The crystalline (CF) and soluble fractions (SF) of the PCR polypropylene resins as well as the ethylene contents and intrinsic viscosities of the respective fractions were analyzed by use of the CRYSTEX instrument, Polymer Char (Valencia, Spain) in line with ISO16152-2022 - Method 2. Details of the technique and the method can be found in literature (Ljiljana Jeremic, Andreas Albrecht, Martina Sandholzer & Markus Gahleitner (2020) Rapid characterization of high-impact ethylene propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH3 stretching vibration (centered at app. 2960 cm-1) and the CH stretching vibration (2700-3000 cm-1) that are serving for the determination of the concentration and the ethylene content in ethylenepropylene copolymers. The IR4 detector is calibrated with series of 8 EP copolymers with known ethylene content in the range of 2 wt.-% to 69 wt.-% (determined by 13C-NMR) and each at various concentrations, in the range of 2 and 13 mg/ml. To encounter for both features, concentration and ethylene content at the same time for various polymer concentrations expected during Crystex analyses the following calibration equations were applied:

$$\text{Conc} = a + b*\text{Abs(CH)} + c*(\text{Abs(CH)})^2 + d*\text{Abs(CH}_3) + e*(\text{Abs(CH}_3)^2 + f*\text{Abs(CH)}*\text{Abs(CH}_3)$$

$$\text{(Equation 1)}$$

$$\text{CH}_3/1000\text{C} = a + b*\text{Abs(CH)} + c* \text{Abs(CH3)} + d * (\text{Abs(CH}_3)/\text{Abs(CH)}) + e * (\text{Abs(CH}_3)/\text{Abs(CH)})^2$$

$$\text{(Equation 2)}$$

The constants a to e for equation 1 and a to f for equation 2 were determined by using least square regression analysis.

The $CH_3/1000C$ is converted to the ethylene content in wt.-% using following relationship:

$$\text{Wt.-\% (ethylene in EP copolymers)} = 100 - \text{CH}_3/1000\text{TC} * 0.3 \qquad \text{(Equation 3)}$$

Intrinsic viscosity (IV) of the PCR polypropylene resin and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV\ (dL/g) = a*\ Vsp/c \qquad \text{(Equation 4)}$$

The samples to be analyzed are weighed out in concentrations of 10 mg/ml to 20 mg/ml. To avoid injecting possible gels and/or polymers which do not dissolve in TCB at 160 °C, like PET and PA, the weighed out sample was packed into a stainless steel mesh MW 0,077/D 0.05 mm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400 rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV [dl/g] and the C2 [wt.-%] of the PP composition. During the second injection the soluble fraction (at low temperature) and the crystalline fraction (at high temperature) with the crystallization cycle are measured (wt.-% SF, wt.-% CF, wt.-% C2, wt.-% C2(SF), wt.-% C2(CF), IV(SF), IV(CF)), where the wt.-% CF is calculated in the following way:

$$\text{Wt.-\% CF} = 100 - \text{wt.-\% SF} \quad \text{(Equation 5)}$$

**Melt Flow Rate**

The melt flow rate (MFR) was determined according to ISO 1133 and was indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg.

**Xylene cold solubles (XCS)**

The xylene soluble (XS) fraction as defined and described in the present invention is determined in line with ISO 16152 as follows: 2.0 g of the polymer were dissolved in 250 ml p-xylene at 135°C under agitation. After 30 minutes, the solution was allowed to cool for 15 minutes at ambient temperature and then allowed to settle for 30 minutes at 25 +/- 0.5°C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows:

XS% = (100*m*Vo)/(mo*v); mo = initial polymer amount (g); m = weight of residue (g); Vo = initial volume (ml); v = volume of analysed sample (ml).

**The Flexural Modulus** is determined according to ISO 178 method A (3-point bending test) on 80 mm $\times$ 10 mm $\times$ 4 mm specimens. Following the standard, a test speed of 2 mm/min and a span length of 16 times the thickness was used. The testing temperature was $23\pm2$ ° C. Injection moulding was carried out according to ISO 19069-2 using a melt temperature of 230 °C for all materials irrespective of material melt flow rate.

**Tensile properties** in machine and transverse direction were determined according to ISO 527-1/-3 at 23°C on monolayer cast films with a thickness of 50 μm produced as indicated below. In addition, the tensile modulus (secant modulus between 0.05% and 0.25% elongation) was also determined. Testing was performed at a cross head speed of 1 mm/min to determine the tensile modulus, then the test speed was increased to 200 mm/min until the film broke.

**X-ray fluorescence (XRF)**

The instrument used for the XRF measurements was a wavelength dispersive Zetium (2,4kW) from Malvern Panalytical. The instrument was calibrated with Adpol, RoHs, Toxel standards from Malvern Panalytical and from a custom set of calibration standards (referred to in the following as "Custom") also from Malvern Panalytical according to the following table:

| Elements | range (ppm) |
|---|---|
| Mg | 0 - 1425 |
| Al | 0 - 53.3 |
| Si | 0 - 1970 |
| P | 0 - 103 |

(continued)

| Elements | range (ppm) |
|---|---|
| S | 0 - 281 |
| Ca | 0 - 583 |
| Ti | 0 - 273 |
| Zn | 0 - 576 |

The analysis was conducted under vacuum on a plaque with a diameter of 40mm and a thickness of 2mm.

The method is used to determine the quantitative content of Na, Mg, Al, Si, P, S, Ca, Ti, Zn, Cu, Br, Cl, K, Sr, Fe in a given polyolefin matrix within defined ranges of these standards.

The content of each precise element was evaluated with the following standards (LOD = limit of detection):

| Elements | Range (ppm) | Standard used | LOD (ppm) |
|---|---|---|---|
| Al | 0 - 53.3 | Custom | 2.5 |
| Br | 0 - 163.3 | Toxel | 0.5 |
| Ca | 0 - 583 | Custom | 2.8 |
| Cl | 0 - 1075 | RoHS | 2.5 |
| Cu | 0 - 25.1 | Toxel | 0.5 |
| Fe | | - | |
| K | | - | |
| Na | 0 - 189 | Adpol | 5.4 |
| Mg | 0 - 1425 | Custom | 15 |
| P | 0 - 103 | Custom | 1.3 |
| S | 0 - 281 | Custom | 2.1 |
| Si | 0 - 1970 | Custom | 14.4 |
| Sr | | - | |
| Ti | 0 - 273 | Custom | 1.5 |
| Zn | 0 - 576 | Custom | 0.7 |

Elements which are not covered by standards, or the content is outside of the calibrated standard range, are then analyzed with a semi-quantitative mode (software Omnian from Malvern Panalytical). For elements not covered by the calibration standards, no value is reported if the corresponding peak is not visible and therefore cannot be analysed with the software Omnian.

The CH content needed to run the semiquantitative evaluation with Omnian was estimated by the software itself.

In the context of the present invention, the presence of a wide range of elements not generally encountered in virgin polymer grades (at least certainly not in combination) is an indicator that a particular polypropylene grade is at least partially derived from recycled material.

The following table presents typical data for a number of virgin grades and a number of recycled grades (i.e. r-PP), which demonstrate that the presence of certain elements is indicative of recycling origin:

| | Virgin 1 | Virgin 2 | Virgin 3 | rPP Rigid packaging | | rPP Flexible packaging | |
|---|---|---|---|---|---|---|---|
| | | | | white | natural | labels | transparent (mixed) |
| Al | 45 | 38 | 39 | 126.2 | 67 | 142.3 | 155 |
| Ca | 24 | 71 | 70 | 1425.6 | 143 | 13580 | 983.8 |
| Cl | 20 | <LOD | <LOD | 40.4 | 28.5 | 54.8 | 460 |
| P | 22 | 33 | 31 | 105.5 | 120.0 | 58.7* | 106 |

(continued)

| | Virgin 1 | Virgin 2 | Virgin 3 | rPP Rigid packaging | | rPP Flexible packaging | |
|---|---|---|---|---|---|---|---|
| | | | | white | natural | labels | transparent (mixed) |
| Ti | <LOD | <LOD | <LOD | 4965.4 | 206 | 3599.5 | 1655.8 |
| Mg | <LOD | <LOD | <LOD | 397.1 | 94.5 | 140.8 | 250 |
| Si | <LOD | <LOD | <LOD | 537.5 | 145.5 | 152 | 408.5 |
| Fe | <LOD | <LOD | <LOD | 37.6 | 51 | 94.75 | 51.5 |
| Na | <LOD | <LOD | <LOD | 56 | 29 | 271.3 | 112.7 |
| S | <LOD | <LOD | <LOD | 21.6 | 7.5 | 78.5 | 34.75 |
| Zn | <LOD | <LOD | <LOD | 34.1 | 36.3 | 155 | 30.8 |
| Br | <LOD | <LOD | <LOD | 7.5 | 4 | 2** | 2.8 |
| K | <LOD | <LOD | <LOD | <LOD | <LOD | 24** | <LOD |
| Sr | <LOD | <LOD | <LOD | <LOD | <LOD | 18** | <LOD |
| Cu | <LOD | <LOD | <LOD | <LOD | <LOD | <LOD | 8 |

* - measured prior to additivation (i.e. prior to the addition of additional, fresh, stabilizers, whereas all other r-PP values are measured after additivation) ** - only observed in some samples, not all.

## HPLC analysis

The content of antioxidants (compounds like Irganox® 1010 and Irgafos® 168, i.e., Pentaerythrityl-tetrakis(3-(3',5'-di-tert. butyl-4-hydroxyphenyl)-propionate) and Tris (2,4-di-t-butylphenyl) phosphite, as well as oxidised variants thereof) was determined via high performance liquid chromatography (HPLC) after extraction with ethyl acetate. First, about 10 g of the sample were cryo-milled with the aid of liquid nitrogen. After that, a 0.5 g of the milled sample was extracted using ethyl acetate as a solvent. Extraction was performed at 95 °C for 90 min under constant stirring. After letting the mixture cool down to room temperature again it was filtered and put to the HPLC test for the quantification of antioxidants. The HPLC system was equipped with a C18 column for the separation and a diode array detector (DAD) for detection.

The presence of phosphorus in polymer grades is almost 100% attributable to phosphorus-based stabilizers, such as antioxidants. The content of such additives in a virgin grade is very consistent across almost all commercially available grades, corresponding to the amount required to sufficiently stabilize the polymer grade for the anticipated number of compounding steps (given that it is typically during these high temperature compounding steps that oxidation is most likely to occur) without incurring unnecessary costs by using too much stabilizer. By the time that a consumer article is recycled, the stabilizers will be largely used up (i.e. they will have been oxidized, preventing further use as an antioxidant) and further phosphorus-based stabilizers will need to be added to stabilize the recyclate grade, meaning that in recyclates the phosphorus present will either a) be at a typical level for a virgin grade, but be predominantly oxidized, or b) will be at a significantly higher level than would be typical for a virgin grade (see Virgin 1 to 3 in the previous table).

The following table discloses typical values of recyclates corresponding to situation a) (i.e. not yet additivated in the mechanical recycling process) and b) (i.e. already additivated in the mechanical recycling process).

| | | [P] ppm by XRF | [Irgafos 168] ppm by HPLC | [Irgafos 168ox] ppm by HPLC | [Irgafos 168ox]/ ([Irgafos168] +[Irgafos168ox]) % |
|---|---|---|---|---|---|
| a) | #1 | 45 | 139 | 470 | 77,2 |
| | #2 | 39 | 0 | 555 | 100 |
| | #3 | 51 | 147 | 624 | 80,9 |
| | #4 | 50 | 145 | 632 | 81,3 |

(continued)

|  |  | [P] ppm by XRF | [Irgafos 168] ppm by HPLC | [Irgafos 168ox] ppm by HPLC | [Irgafos 168ox]/ ([Irgafos168] +[Irgafos168ox]) % |
|---|---|---|---|---|---|
| b) | #5 | 115 | 1471 | 622 | 29,7 |
| | #6 | 103 | 724 | 560 | 43,6 |
| | #7 | 96 | 919 | 466 | 33,6 |
| | #8 | 132 | 1565 | 560 | 26,4 |
| | #9 | 99 | 1358 | 685 | 33,5 |
| | #10 | 130 | 1628 | 726 | 30,8 |

#1 to #4 have typical phosphorus content, as determined by XRF, but a high percentage of the Irgafos is present in oxidized form, whilst 5 to 10 have a phosphorus content, as determined by XRF, that is higher than would be observed in virgin polypropylene grades.

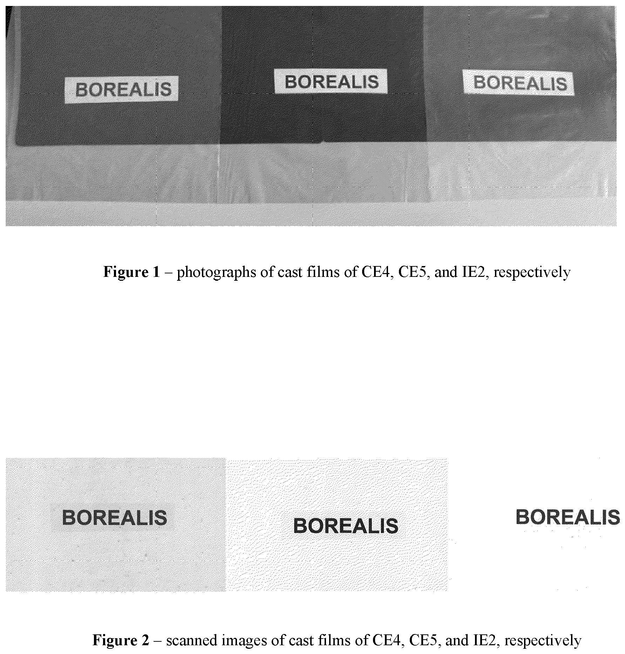

Further tests have been represented graphically in Figure 1, which show precisely the same trends (note: a virgin grade would fall somewhere towards the bottom left of Figure 1, having low total P content of 28-52 ppm and low % of oxidized Irgafos 168)

**TVOC - total amount of volatile organic compounds**

Determination of the total amount of volatile organic compounds (TVOC) is performed by HS-GC-FID/MS.

The TVOC is measured directly on pelletized samples (i.e. without any milling or other size reduction).

Headspace settings: 100°C for 2 hours, 1 gram of sample.

Quantification of specific components using the signals from the FID chromatograms and external standards of the specific components. TVOC is determined semi quantitatively as toluene equivalent by using all peaks in the FID chromatograms of the sample.

Analysis is performed in duplicate.

**Amount of iPP, Polystyrene, Polyethylene (and ethylene containing copolymers), polyethylene terephthalate), and amount of Polyamide-6**

Sample preparation:

All calibration samples and samples to be analyzed were prepared in similar way, on molten pressed plates.

Around 2 to 3 g of compounds to be analyzed were melted at 190°C. Subsequently, for 20 seconds, 60 to 80 bar pressure was applied in a hydraulic heating press. Next, the samples were cooled to room temperature in 40 seconds in a cold press under the same pressure, in order to control the morphology of the compound. The thickness of the plates was controlled by metallic calibrated frame plates 2.5 cm by 2.5 cm, 100 to 200 $\mu$m thick (depending MFR from the sample); two plates were produced in parallel at the same time and in the same conditions. The thickness of each plate was measured before any FTIR measurements were performed; all plates were between 100 to 200 $\mu$m thick.

To control the plate surface and to avoid any interference during the measurement, all plates were pressed between two double-sided silicone release papers.

In case of powder samples or heterogeneous compounds, the pressing process was repeated three times to increase homogeneity by pressed and cutting the sample in the same conditions as described before.

Spectrometer:

Standard transmission FTIR spectroscope such as Bruker Vertex 70 FTIR spectrometer was used with the following set-up:

- a spectral range of 4000-400 cm-1,
- an aperture of 6 mm,
- a spectral resolution of 2 cm-1,
- with 16 background scans, 16 spectrum scans,
- an interferogram zero filling factor of 32

○ Norton Beer strong apodisation.

Spectra were recorded and analysed in Bruker Opus software.

Calibration samples:

As FTIR is a secondary method, several calibration standards were compounded to cover the targeted analysis range, typically from:

○ 0,2 wt.-% to 2,5 wt.-% for PA
○ 0,1 wt.-% to 5 wt.-% for PS
○ 0,2 wt.-% to 2,5 wt.-% for PET
○ 0,1 wt.-% to 4 wt.-% for PVC

The following commercial materials were used for the compounds: Borealis HC600TF as iPP, Borealis FB3450 as HDPE and for the targeted polymers such RAMAPET N1S (Indorama Polymer) for PET, Ultramid® B36LN (BASF) for Polyamide 6, Styrolution PS 486N (Ineos) for High Impact Polystyrene (HIPS), and for PVC Inovyn PVC 263B (under powder form).
All compounds were made at small scale in a Haake kneader at a temperature below 265°C and less than 10 minutes to avoid degradation.
Additional antioxidant such as Irgafos 168 (3000 ppm) was added to minimize the degradation.

Calibration:

The FTIR calibration principle was the same for all the components: the intensity of a specific FTIR band divided by the plate thickness is correlated to the amount of component determined by $^1$H or $^{13}$C solution state NMR on the same plate.
Each specific FTIR absorption band was chosen due to its intensity increase with the amount of the component concentration and due to its isolation from the rest of the peaks, whatever the composition of the calibration standard and real samples.
This methodology is described in the publication from Signoret and al. "Alterations of plastic spectra in MIR and the potential impacts on identification towards recycling", Resources, conservation and Recycling journal, 2020, volume 161, article 104980.
The wavelength for each calibration band was:

○ 3300 cm-1 for PA,
○ 1601 cm-1 for PS,
○ 1410 cm-1 for PET,
○ 615 cm-1 for PVC,
○ 1167 cm-1for iPP.

For each polymer component i, a linear calibration (based on linearity of Beer-Lambert law) was constructed. A typical linear correlation used for such calibrations is given below:

$$x_i = A_i * \frac{E_i}{d} + B_i$$

where xi is the fraction amount of the polymer component i (in wt.-%)

Ei is the absorbance intensity of the specific band related to the polymer component i (in a.u. absorbance unit, values see above).
d is the thickness of the sample plate
Ai and Bi are two coefficients of correlation determined for each calibration curve

No specific isolated band can be found for C2 rich fraction and as a consequence the C2 rich fraction is estimated indirectly,

$$x_{C2\ rich} = 100 - (x_{iPP} + x_{PA} + x_{PS} + x_{PET} + x_{EVA} + x_{PVC} + x_{chalk} + x_{talc})$$

The Chalk and Talc contents are estimated "semi-quantitatively". Hence, this renders the C2 rich content "semi-quantitative".

For each calibration standard, wherever available, the amount of each component was determined by either $^1$H or $^{13}$C solution state NMR, as primary method (except for PA). The NMR measurements were performed on the exact same FTIR plates used for the construction of the FTIR calibration curves.

**Amount of Talc and Chalk**

The talc and chalk contents were measured by Thermogravimetric Analysis (TGA); experiments were performed with a Perkin Elmer TGA 8000. Approximately 15-25 mg of material was placed in a platinum pan. The temperature was equilibrated at 50°C for 10 minutes, and afterwards raised to 950°C under nitrogen at a heating rate of 20 °C/min. The weight loss between ca. 550°C and 700°C ($WCO_2$) was assigned to $CO_2$ evolving from $CaCO_3$, and therefore the chalk content was evaluated as:

$$\text{Chalk content} = 100/44 \times WCO_2$$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as:

$$\text{Ash content} = (\text{Ash residue}) - 56/44 \times WCO_2 - Wcb$$

where Ash residue is the weight% measured at 850°C in the first step conducted under nitrogen.

**CIELAB**

The method was used for measurement of color on flakes and complies with ISO 11664-4. With a spectrophotometer, the 3 standard color value values X, Y and Z are measured, which are used to calculate the CIE L*, a*, b* and its color distances.

**Optical properties**

The total luminous transmittance, diffuse luminous transmittance and haze were measured according to ASTM D1003-21 (Method A-Hazemeter). The clarity is measured using the same machine and principle as haze but for angle less than 2.5° from normal. For clarity measurements, the specimens are positioned in the "clarity-port". The measurement was performed as follows:

- Device: Haze gard plus
- Manufacturer: BYK-Gardner GmbH
- Type:4725
- Illuminant C

Conditions:

- Conditioning time: > 96 h
- Temperature: 23 °C
- Test procedure: A - Hazemeter

**Gloss**

Gloss is measured according to ASTM D2457 at an angle of 45°.

**Optical defects**

100 μm films are prepared by using a ME25/5800 V3 extruder. The line is equipped with a 25 mm extruder in a length of 25 / LD. The cast film line is equipped with a standard chill roll unit, a line scan camera for failure detection and a tension controlled film winder.

The production of a homogeneous film with constant melt pressure and temperature is target. A standardised measurement of 5 m$^2$ film per test is required. The measurement itself ends automatically after reaching the area and the protocol values will be automatically generated by the OCS software.

The number of defects measured in reflection mode is based on 1/m$^2$, and can be divided into size classes and multiplied by the weight factor which results in a "category"-index.

The calculation of the (category)-index (e.g. gel index) is automatically calculated using the following formula:

| | | |
|---|---|---|
| Size class 1 | 100 - 299 μm | weight factor: x 0.1 |
| Size class 2 | 300 - 599 μm | weight factor: x 1.0 |
| Size class 3 | 600 - 1000 μm | weight factor: x 5.0 |
| Size class 4 | > 1000 μm | weight factor: x 10.0 |

This calculation can also be applied to each recorded category (gels, other defects).

In order to obtain an overall overview of all film defects, the quantities of all defects are summed up (combined defects = gels + other defects). This can also be calculated using the index of the respective categories (combined defects index = gels index + other defects index).

Description of gels / and other defects:

Gels

They are defined as defects with a different appearance, but the same colour as the surrounding film. They are typically used for the characterisation of virgin materials

Other defects

Defects which are not common in virgin materials. Some examples of these are:

- yellow coloured oxidised polymer,
- heavily degraded black or brown polymer,
- foreign particles of other polymer types (product mixing),
- as well as foreign material such as metal abrasion, wood splinters, paper...
- V-Gels: in extrusion direction; V-shaped defects with a small area, which are usually caused by degraded fine grains
- Threads: Long, thin defects, often oriented directly in the direction of extrusion
- Inhomogeneities: Mostly due to the dependency relationship between different MFR areas and low energy input to the extruder.

**X-ray Computed Tomography (X-ray CT)**

X-ray Computed Tomography (CT) was performed using a Thermo Fisher Scientific Heliscan MK2 (Thermo Fisher Scientific) device. Pellets were scanned as delivered and placed in a cylindrical sample holder. The Voxelsize was set to 4 μm. The X-ray tube was operated with LaB6 filament, voltage was set to 60 kV, focal spot size was set to medium and a pre-filter made of steel with 0.1 mm thickness was used. The specimens were scanned with Space Filling trajectory. For the reconstruction, the values for shift and scale, that are used for converting 32 bit to final 16 bit data, was fixed for all scans to be able to compare multiple data.

Together with the specimens, discs with 5 mm in diameter and 500 μm in thickness, made of different polymers, were scanned at once. At least a disc made of one PP grade and one PET grade have to be scanned.

The software Avizo for industrial inspection (Thermo Fisher Scientific) was used for data analysis. From the PP and PET discs, the grey values were determined acting as guide for thresholding. Specimen data was segmented into Polymer and air for the determination of total volume with a threshold which is 72 % lower than that of PP.

Specimen data was segmented with a grey value threshold, which is 11 % higher than that of PET leading to the fraction of high density particulate contaminants. Taking the density of PP with 0.905 g/cm$^3$ and that of PET with 1.38 g/cm$^3$ into account, this threshold corresponds to a density of 1.53 g/cm$^3$.

A second analysis was performed with a lower threshold leading to the fraction of Low density particulate contaminants. For this threshold the peak grey value of the pellets was determined. A threshold which was 26 % higher than that of the polymer peak was applied. All inclusions with a grey value higher than that of the first analysis, the high density particulate contaminants, were subtracted from this segmentation.

Each particle was segmented into an individual object using a Connected Component filter. The minimum object size was set to 5 Voxels. For each object, the features average grey value, position, volume, length, width and thickness were determined.

## 2. Examples

### 2.1. Preparation of the virgin polypropylenes (v-PP1 and v-PP2)

The catalyst used to prepare v-PP1 was a Ziegler-Natta catalyst as used in the inventive examples of WO 2016/066446 A1. Dicyclopentyl dimethoxy silane (donor D) was used as external donor and triethyl aluminium (TEAL) was used as co-catalyst.

The polymerization conditions for v-PP1 are presented in Table 1 below.

**Table 1** Polymerization conditions for the virgin polypropylene (v-PP1)

|  |  | v-PP1 |
|---|---|---|
| **Prepolymerization** | | |
| Temperature | [°C] | 20 |
| Pressure | [kPa] | 5380 |
| Catalyst feed | [g/h] | 2.5 |
| Donor feed | [g/t(C3)] | 40.8 |
| TEAL feed | [g/t(C3)] | 150 |
| **Loop reactor** | | |
| Temperature | [°C] | 83 |
| Pressure | [kPa] | 5370 |
| Split | [wt.-%] | 50.0 |
| H2/C3 | [kg/ton] | 0.3 |
| $MFR_2$ | [g/10 min] | 1.3 |
| XCS | [wt.-%] | 2.2 |
| **1st Gas phase reactor** | | |
| Temperature | [°C] | 87 |
| Pressure | [kPa] | 2399 |
| Split | [wt.-%] | 35.0 |
| H2/C3 | [mol/kmol] | 2.6 |
| C2/C3 | [mol/kmol] | 0.2 |
| $MFR_2$ | [g/10 min] | 1.1 |
| XCS | [wt.-%] | 1.7 |
| **2nd Gas phase reactor** | | |
| Temperature | [°C] | 70 |
| Pressure | [kPa] | 2000 |
| Split | [wt.-%] | 15.0 |
| H2/C3 | [mol/kmol] | 125 |
| C2/C3 | [mol/kmol] | 400 |

(continued)

| Final Properties (pellet) | | |
|---|---|---|
| MFR$_2$ | [g/10 min] | 5.0 |
| C2 | [wt.-%] | 7.3 |
| iV | [dL/g] | 2.10 |
| SF | [wt.-%] | 15.1 |
| C2(SF) | [wt.-%] | 32.7 |
| iV(SF) | [dL/g] | 1.72 |
| CF | [wt.-%] | 84.9 |
| C2(CF) | [wt.-%] | 3.1 |
| iV (CF) | [dL/g] | 2.14 |

The resultant polymer powder from v-PP1 was compounded with with 371 ppm of Irganox 1010 (produced by BASF), 741 ppm of Irgafos 168 (supplied by BASF), 320 ppm of Trigonox 101 (supplied by Nouryon), and 588 ppm of Ceasit AV/T (supplied by Baerlocher) on a ZSK 18 twin screw extruder, with melt temperature of 210 °C and production rate of 7 kg/h.

The virgin polypropylene v-PP2 was produced in Borstar pilot plant, with configuration of prepolymerization-loop with the commercially available catalyst Avant ZN180 (Lyondellbasell). The conditions for catalyst were: TEAL 150 g/t propylene, donor 10 g/t propylene, catalyst feeding rate 1.5 g/h. The loop pressure was 35 bar and while the temperature was 75°C, with H$_2$ feed of 1100 ppm. The obtained powder was then compounded with 333 ppm of Irganox 1010 (supplied by BASF), 667 ppm of Irgafos 168 (supplied by BASF), and 300 ppm of DHT-4V (supplied by Kisuma / Kyowa) on a ZSK 18 twin screw extruder, with melt temperature of 210 °C and production rate of 7 kg/h. Final MFR of the pellets was 8 g/10 min.

### 2.2 Mixed-plastic polypropylene blends (B)

The following recycling streams were used as precursor recycling streams to generate the mixed-plastic polypropylene blends (B):

**A1** a post-consumer flexible polypropylene waste stream available as a byproduct of a bottle recycling process.
**A2** a German post-consumer plastic waste stream, fulfilling the specification DSD323-2.
**A3** a Swedish post-consumer plastic waste stream, enriched in post-consumer flexible PP articles.

For **B1,** the following procedure was employed (which employ a precursor recycling stream that does contain at least 85 wt.-% of polypropylene-containing labels):

**Step 1:** washing of the precursor A1 in a single washing step for 20 minutes at 80 °C using an aqueous washing solution of 3.0 wt.-% NaOH and 0.30 wt.-% of a detergent TubiWash EYE, followed by the removal of material having a density different to polypropylene via a hydrocyclone separation;

**Step 2:** separating the product of step 1 into a heavy (i.e. rigid pieces) and light (i.e. flexible pieces) fraction using a wind sifter;

**Step 3:** the light fraction of step 2 was melt extruded using an extruder equipped with double filtration (a laser filter was used as a first filter and a screen changer was used as a second filter. The laser filter was formed with through-holes having a frustoconical cross-section, each through hole having a minor diameter of 90 μm, and a major diameter of 110 μm. The screen changer had a filter fineness of 100 μm) to form a recycled polypropylene grade.

For **B2** to **B5** (which employ precursor recycling streams that do not contain at least 85 wt.-% of polypropylene-containing labels), General Procedure A was followed:

**Step 1:** the precursor recycling stream was sorted by color (the criteria for this sorting step differ from experiment to experiment, see below);

(continued)

**Step 2:** the sorted product of step 1 was washed first in a low temperature alkaline washing step, then in a high temperature alkaline washing step;

**Step 3:** the washed product of step 2 was further sorted into a heavy fraction (i.e. rigid pieces) and light fraction (i.e. flexible pieces) using a wind sifter, with the light fraction discarded and the heavy fraction retained;

**Step 4:** the sorted product of step 3 was melt extruded to form a recycled polypropylene grade.

**B2** involved exposing precursor **A2** to General Procedure A, wherein step 1 was not carried out. **B2** approximately corresponds to the r-PP film of Waste management 153 (2022) 41-51.

**B3** involved exposing precursor **A2** to General Procedure A, wherein step 1 sorted for colored pieces only (i.e. transparent pieces were removed).

**B4** involved exposing precursor **A2** to General Procedure A, wherein step 1 sorted for colored pieces only (i.e. transparent pieces were removed) and step 4 additionally includes a double melt filtration step (as described for Step 3 of the preparation of B1).

**B5** involved exposing precursor **A3** to General Procedure A, wherein step 1 sorted for transparent pieces (i.e. colored pieces were removed).

(note: as the precursor recycling stream A1 does not contain significant amounts of polypropylene containing pigments (i.e. pigments dispersed in the polypropylene matrix, as opposed to inks on the surface), a color sorting step (i.e. step 1 of General Procedure A) is not necessary for the preparation of **B1**)).

The properties of the various mixed-plastic polypropylene blends (B) are given in Table 2.

**Table 2** Properties of the inventive and comparative mixed-plastic polypropylene blends (B)

| | | B1 | B2 | B3 | B4 | B5 |
|---|---|---|---|---|---|---|
| $MFR_2$ | [g/10 min] | 6.3 | 6.9 | 11.8 | 7.4 | 8.2 |
| PS(FTIR) | [wt.-%] | <LOD | 0.2 | n.m. | 0.8 | 0.7 |
| PET(FTIR) | [wt.-%] | <LOD | 0.1 | n.m. | 0.4 | <LOD |
| PA(FTIR) | [wt.-%] | <LOD | 0.3 | n.m. | 0.1 | 0.2 |
| Ash residue | [wt.-%] | 3.1 | 1.2 | 2.2 | 0.4 | 0.8 |
| Ash content | [wt.-%] | 0.5 | 0.3 | n.m. | 1.5 | 0.2 |
| Chalk | [wt.-%] | 4.6 | 0.2 | n.m. | 1.4 | 0.2 |
| TVOC | [μg/g] | 13 | n.m. | n.m. | 20 | n.m. |
| **CRYSTEX** | | | | | | |
| C2(total) | [wt.-%] | 3.1 | 9.35 | 9.87 | 5.5 | 4.7 |
| iV(total) | [dL/g] | 2.03 | 1.94 | 1.79 | 1.96 | 1.92 |
| SF | [wt.-%] | 5.0 | 6.6 | 8.7 | 7.2 | 7.2 |
| C2(SF) | [wt.-%] | # | 20.2 | 23.9 | 10.2 | 15.8 |
| iV(SF) | [dL/g] | # | 1.10 | 1.45 | 0.97 | 1.33 |
| CF | [wt.-%] | 95.0 | 93.4 | 91.3 | 92.8 | 92.8 |
| C2(CF) | [wt.-%] | 3.0 | 9.0 | 9.1 | 4.9 | 3.3 |
| iV(CF) | [dL/g] | 2.08 | 1.98 | 1.81 | 2.02 | 1.92 |
| **CIELAB** | | | | | | |
| L* | [-] | 79.8 | 47.8 | 51.5 | 51.53 | 43.4 |
| a* | [-] | -4.0 | -2.5 | -1.8 | -3.3 | -1.6 |
| b* | [-] | 7.8 | 5.8 | 5.0 | 7.7 | 1.5 |
| **Optical defects** | | | | | | |
| combined defect index | [-] | 13,127 | n.m. | n.m. | 81,644 | 69,822 |

(continued)

| Optical defects | | | | | | |
|---|---|---|---|---|---|---|
| combined defect number | [-] | 100,023 | n.m. | n.m. | 242,530 | 229,516 |
| **X-ray CT** | | | | | | |
| dens >1.10 g/cm$^3$ | [vol-%] | 0.40 | n.m. | n.m. | 0.78 | 0.34 |
| dens >1.10 g/cm$^3$; size >50 $\mu$m | [vol-%] | 0.12 | n.m. | n.m. | 0.26 | 0.16 |
| dens 1.10-1.53 g/cm$^3$ | [vol-%] | 0.18 | n.m. | n.m. | 0.54 | 0.26 |
| dens 1.10-1.53 g/cm$^3$; size >50 $\mu$m | [vol-%] | 0.04 | n.m. | n.m. | 0.18 | 0.12 |
| **XRF** | | | | | | |
| Al | [ppm] | 153 | 195 | 242 | 258 | 287 |
| Br | [ppm] | <LOD | <LOD | 6 | 3 | <LOD |
| Ca | [ppm] | 14725 | 2081 | 3553 | 3181 | 1151 |
| Cl | [ppm] | 70 | 422 | 355 | 401 | 221 |
| Cr | [ppm] | <LOD | 5 | 11 | 9 | <LOD |
| Cu | [ppm] | <LOD | 17 | 46 | 49 | 16 |
| Fe | [ppm] | 86 | 111 | 455 | 97 | 60 |
| K | [ppm] | ## | ## | 18 | ## | ## |
| Na | [ppm] | 574 | 300 | 154 | 331 | 65 |
| Mg | [ppm] | 193 | 269 | 488 | 402 | 285 |
| P | [ppm] | 103 | 52 | 115 | 96 | 127 |
| S | [ppm] | 33 | 51 | 83 | 56 | 41 |
| Si | [ppm] | 178 | 498 | 746 | 661 | 496 |
| Sr | [ppm] | 11 | ## | ## | ## | ## |
| Ti | [ppm] | 3400 | 4600 | 6758 | 7752 | 2200 |
| Zn | [ppm] | 54 | 58 | 65 | 44 | 34 |
| # - due to the low amount of SF, the iV(SF) and C2(SF) cannot be accurately determined.<br>## - no clearly visible peak in the XRF spectrum<br>### - LOD = limit of detection | | | | | | |

## 2.3 Preparation of Inventive, Comparative and Reference Films

The inventive and comparative compositions were prepared based on the recipes indicated in Table 3 by compounding in a co-rotating twin-screw extruder Coperion ZSK 40 at 220 °C.

Prior to conversion, the recycled polypropylene pellets of compositions B 1, B2, B3, B4, and B5 were dried for 4 h at 90°C.

50 $\mu$m cast films were prepared from the compositions using a Collin lab scale cast film line. The ash residue of v-PP1 is negligible, therefore the ash residue of IE2, CE4 and CE5 is taken to be 35% of the value of the individual recyclates B1, B4 and B5 respectively.

**Table 3** Recipes for and properties of reference, comparative and inventive compositions

| | | RE1 | RE2 | IE1 | CE1 | CE2 | CE3 | IE2 | CE4 | CE5 |
|---|---|---|---|---|---|---|---|---|---|---|
| v-PP1 | [wt.-%] | 100 | - | - | - | - | - | 65 | 65 | 65 |
| v-PP2 | [wt.-%] | - | 100 | - | - | - | - | - | - | - |
| B1 | [wt.-%] | - | - | 100 | - | - | - | 35 | - | - |
| B2 | [wt.-%] | - | - | - | 100 | - | - | - | - | - |

(continued)

| | | RE1 | RE2 | IE1 | CE1 | CE2 | CE3 | IE2 | CE4 | CE5 |
|---|---|---|---|---|---|---|---|---|---|---|
| B3 | [wt.-%] | - | - | - | - | 100 | - | - | - | - |
| B4 | [wt.-%] | - | - | - | - | - | - | - | 35 | - |
| B5 | [wt.-%] | - | - | - | - | - | 100 | - | - | 35 |
| Flex Mod | [MPa] | 920 | 1600 | 1330 | 1110 | 1090 | 1170 | n.m. | n.m. | n.m. |
| Modulus (MD) | [MPa] | 620 | 890 | n.m. | 410 | 540 | 520 | 640 | 590 | 600 |
| Modulus (TD) | [MPa] | 560 | 870 | n.m. | 410 | 470 | 500 | 590 | 570 | 550 |
| Stress@B(MD) | [MPa] | 55 | 47 | n.m. | 28 | 31 | 34 | 49 | 46 | 48 |
| Stress@B(TD) | [MPa] | 33 | 28 | n.m. | 19 | 20 | 22 | 29 | 30 | 29 |
| Strain@B(MD) | [%] | 650 | 510 | n.m. | 520 | 570 | 550 | 610 | 610 | 620 |
| Strain@B (TD) | [%] | 620 | 530 | n.m. | 490 | 530 | 570 | 590 | 600 | 600 |
| Stress@Y(MD) | [MPa] | 15.7 | n.m. | n.m. | 11.9 | 14.1 | 13.8 | 16.1 | 15.4 | 15.6 |
| Stress@Y(TD) | [MPa] | 14.2 | n.m. | n.m. | 11.6 | 12.3 | 13.0 | 14.6 | 14.4 | 14.2 |
| Strain@Y(MD) | [%] | 8.9 | n.m. | n.m. | 8.2 | 7.6 | 8.0 | 8.2 | 8.7 | 8.6 |
| Strain@Y(TD) | [%] | 8.2 | n.m. | n.m. | 5.3 | 5.3 | 7.1 | 6.9 | 7.2 | 7.5 |
| Gloss 45° (MD) | [%] | 42.3 | 91.6 | n.m. | 19.1 | 10.8 | 25.0 | 26.9 | 24.4 | 26.9 |
| Gloss 45° (TD) | [%] | 37.2 | 92.1 | n.m. | 16. | 10.1 | 23.0 | 23.6 | 20.8 | 20.5 |
| Clarity | [%] | 63.4 | 99.6 | n.m. | 32.6 | 20.8 | 52.5 | 51.3 | 50.5 | 51.2 |
| Haze | [%] | 18.8 | 0.2 | n.m. | 78.3 | 95.2 | 58.4 | 56.3 | 60.4 | 39.2 |
| Dif Lum Trans | [%] | 17.5 | 0.2 | n.m. | 46.6 | 38.3 | 38.6 | 46.8 | 44.3 | 32.3 |
| Total Lum Trans | [%] | 93.2 | 93.6 | n.m. | 59.6 | 40.2 | 66.2 | 83.0 | 73.5 | 82.6 |

As can be seen from Table 3, IE2 has comparable mechanical properties to CE4 and CE5 despite the higher inorganic residue content. Furthermore, the optical properties of IE2 are slightly superior to those of CE4 and CE5, which is especially surprising, given the higher inorganic residue content. Furthermore, Figures 1 and 2 show that the films of IE2 have a superior appearance, either via a photograph (Figure 1) or via a photocopier scan (Figure 2). In order to generate Figures 1 and 2, text (BOREALIS) was printed on paper and the 50 μm cast films placed on top of the printed text. IE2 has by far the best optical appearance, with the black spots particularly visible on CE4 and to a lesser extent on CE5 in Figure 2.

## Claims

1. A cast film comprising one or more layers, wherein at least one of the one or more layers consists of a polymer composition (PC), wherein the polymer composition (PC) comprises:

   a) an amount in the range from 0.0 to 80.0 wt.-%, relative to total weight of the polymer composition (PC), of a virgin propylene polymer (v-PP); and
   b) an amount in the range from 20.0 to 100.0 wt.-%, relative to total weight of the polymer composition (PC), of a mixed-plastic polypropylene blend (B) having a melt flow rate ($MFR_2$), determined according to ISO 1133 at 230 °C and 2.16 kg, in the range from 3.5 to 10.0 g/10 min, wherein the polymeric part of said mixed-plastic polypropylene blend (B) has:

      i) an ethylene content (C2(total)), determined according to CRYSTEX QC analysis, in the range from 0.0 to 5.0 wt.-%;
      ii) a crystalline fraction (CF) content, determined according to CRYSTEX QC analysis, in the range from 93.0 to 100.0 wt.-%;
      iii) a soluble fraction (SF) content, determined according to CRYSTEX QC analysis, in the range from 0.0 to 7.0 wt.-%; and

iv) an ethylene content of the crystalline fraction (C2(CF)), determined according to CRYSTEX QC analysis, in the range from 0.0 to 5.0 wt.-%.

2. The cast film according to claim 1, wherein the virgin propylene polymer (v-PP) is a propylene homopolymer (h-PP) or a heterophasic propylene copolymer (HECO), more preferably a heterophasic propylene-ethylene copolymer (HECO).

3. The cast film according to claim 2, wherein the virgin propylene polymer (v-PP) is a heterophasic propylene-ethylene copolymer (HECO) having one or more, preferably all, of the following properties:

a) a melt flow rate ($MFR_2$), determined according to ISO 1133 at 230 °C and 2.16 kg, in the range from 1.0 to 10.0 g/10 min;
b) a soluble fraction (SF) content, determined according to CRYSTEX QC analysis, in the range from 10.0 to 25.0 wt.-%, and a crystalline fraction (CF) content, determined according to CRYSTEX QC analysis, in the range from 75.0 to 90.0 wt.-%;
c) an ethylene content (C2(total)), determined according to CRYSTEX QC analysis, in the range from 4.0 to 10.0 wt.-%;
d) an ethylene content of the crystalline fraction (C2(CF)), determined according to CRYSTEX QC analysis, in the range from 1.0 to 5.0 wt.-%;
e) an ethylene content of the soluble fraction (C2(SF)), determined according to CRYSTEX QC analysis, in the range from 20.0 to 40.0 wt.-%;
f) an intrinsic viscosity (iV(total)), determined according to CRYSTEX QC analysis, in the range from 1.20 to 3.00 dL/g;
g) an intrinsic viscosity of the crystalline fraction (iV(CF)), determined according to CRYSTEX QC analysis, in the range from 1.20 to 3.00 dL/g; and
h) an intrinsic viscosity of the soluble fraction (iV(SF)), determined according to CRYSTEX QC analysis, in the range from 1.00 to 2.50 dL/g.

4. The cast film according to any one of the preceding claims, wherein at least 90 wt.-%, more preferably at least 95 wt.-%, yet more preferably at least 98 wt.-% of the mixed-plastic polypropylene blend (B) derives from recycled material.

5. The cast film according to claim 4, wherein the recycled material is at least 85 wt.-% derived from polypropylene-containing labels.

6. The cast film according to claim any one of the preceding claims, wherein:

a) the mixed-plastic polypropylene blend (B) has a content of inorganic residues (ash residue), determined by thermogravimetric analysis (TGA), in the range from 0.10 to 7.5 wt.-%, relative to the total weight of the mixed-plastic polypropylene blend (B), more preferably in the range from 1.0 to 5.0 wt.-%, most preferably in the range from 2.0 to 4.0 wt.-%; and/or
b) the polymer composition (PC) has a content of inorganic residues (ash residue), determined by thermogravimetric analysis (TGA), in the range from 0.10 to 7.5 wt.-%, relative to the total weight of the polymer composition (PC), more preferably in the range from 0.30 to 5.0 wt.-%, most preferably in the range from 0.50 to 4.0 wt.-%.

7. The cast film according to any one of the preceding claims, wherein the mixed-plastic polypropylene blend (B) has:

a) a total combined defect index value, determined according to the method given in the determination methods, in the range from 4,000 to 35,000, more preferably in the range from 8,000 to 30,000, most preferably in the range from 10,000 to 25,000; and/or
b) a combined defect number, determined according to the method given in the determination methods, in the range from 20,000 to 200,000, more preferably in the range from 30,000 to 180,000, most preferably in the range from 40,000 to 150,000.

8. The cast film according to any one of the preceding claims, wherein the mixed-plastic polypropylene blend (B) has:

a) an aluminium (Al) content, determined by X-ray fluorescence spectroscopy (XRF), of at least 60 ppm; and/or at least three of, more preferably all of, the following properties:
b) an iron (Fe) content, determined by X-ray fluorescence spectroscopy (XRF), of at least 30 ppm;

c) a sodium (Na) content, determined by X-ray fluorescence spectroscopy (XRF), of at least 30 ppm;

d) a sulphur (S) content, determined by X-ray fluorescence spectroscopy (XRF), of at least 5 ppm; and

e) a zinc (Zn) content, determined by X-ray fluorescence spectroscopy (XRF), of at least 25 ppm.

9. The cast film according to any one of the preceding claims, wherein the mixed-plastic polypropylene blend (B) has a total amount of volatile organic compounds (TVOC), determined according to the measurement given in the determination methods, in the range from 0 to 25 $\mu$g/g, more preferably in the range from 0 to 18 $\mu$g/g, most preferably in the range from 0 to 15 $\mu$g/g.

10. The cast film according to any one of the preceding claims, wherein the polymer composition (PC) comprises, more preferably consists of

a) an amount in the range from 0.0 to 70.0 wt.-%, relative to total weight of the polymer composition (PC), of the virgin propylene polymer (v-PP);

b) an amount in the range from 30.0 to 100.0 wt.-%, relative to total weight of the polymer composition (PC), of the mixed-plastic polypropylene blend (B);

c) optionally, an amount in the range from 0.0 to 10.0 wt.-%, relative to total weight of the polymer composition (PC), of further polymeric components (P); and

d) optionally, an amount in the range from 0.0 to 5.0 wt.-%, relative to total weight of the polymer composition (PC), of additives (A).

11. The cast film according to any one of the preceding claims, having a thickness in the range from 10 to 200 $\mu$m, more preferably in the range from 20 to 100 $\mu$m, most preferably in the range from 30 to 80 $\mu$m.

12. The cast film according to any one of the preceding claims, having one or more, preferably all, of the following properties:

a) a total luminous transmittance, determined according to ASTM D1003, in the range from 70 to 100%;

b) a clarity value, determined according to ASTM D1003, in the range from 40 to 80%;

c) a haze value, determined according to ASTM D1003, in the range from 20 to 80%;

d) a gloss value at 45 ° in the machine direction (MD), determined according to ASTM D2457, in the range from 20.0 to 35.0; and

e) a gloss value at 45 ° in the transverse direction (TD), determined according to ASTM D2457, in the range from 18.0 to 30.0.

13. The cast film according to any one of the preceding claims, wherein:

a) the polymer composition has a content of inorganic residues (ash residue), determined by thermogravimetric analysis (TGA), in the range from 1.0 to 5.0 wt.-%, relative to the total weight of the polymer composition (PC), most preferably in the range from 2.0 to 4.0 wt.-%;

b) the cast film has a thickness in the range from 20 to 100 $\mu$m, most preferably in the range from 30 to 80 $\mu$m; and

c) the cast film has a haze value, determined according to ASTM D1003, in the range from 20 to 80%, more preferably in the range from 30 to 70%, most preferably in the range from 40 to 60%.

14. The cast film according to any one of the preceding claims being a monolayer film.

15. The cast film according to any one of claims 1 to 13, being a 3-layer film wherein the core layer consists of the polymer composition (PC) as defined in any one of claims 1 to 10.

**Figure 1** – photographs of cast films of CE4, CE5, and IE2, respectively

**Figure 2** – scanned images of cast films of CE4, CE5, and IE2, respectively

Europäisches
Patentamt

European
Patent Office

Office européen
des brevets

## EUROPEAN SEARCH REPORT

**Application Number**

EP 24 16 7164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/227642 A1 (WANG JINGBO [AT] ET AL) 20 July 2023 (2023-07-20) | 1,3,6,8, 10-15 | INV. C08L23/12 |
| Y | * table 3 IE1 * | 1,3,6,8, 10-15 | C08L23/14 |
| A | | 2,4,5,7, 9 | |
| | ----- | | |
| X | US 2018/237564 A1 (MASSARI PAOLA [IT] ET AL) 23 August 2018 (2018-08-23) | 1,3,6,8, 10-15 | |
| Y | * table 2 ex 1-2 * | 1,3,6,8, 10-15 | |
| A | | 2,4,5,7, 9 | |
| | ----- | | |
| Y | "PP regranulate natural ex. film, Product code: 014801", , 4 December 2023 (2023-12-04), XP002812068, Retrieved from the Internet: URL:https://www.sinox-polymers.com/en/pp-r egranulate-natural-product-code-014801.htm l [retrieved on 2024-08-23] | 1,3,6,8, 10-15 | |
| A | * the whole document * | 2,4,5,7, 9 | |
| | ----- | | |
| | -/-- | | |

**TECHNICAL FIELDS SEARCHED (IPC)**

C08L
C08J

The present search report has been drawn up for all claims

| Place of search | Date of completion of the search | Examiner |
|---|---|---|
| Munich | 28 August 2024 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 16 7164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Pfeiffer Marvin ET AL:  "Technical Data Sheet Sinox PIR PP Regranulate natural color Product Code: 014801", , 4 December 2023 (2023-12-04), pages 1-1, XP093198125, Retrieved from the Internet: URL:https://www.sinox-polymers.com/en/pp-r egranulate-natural-product-code-014801.htm l?file=files/sinox-custom/documents/Datenb l%C3%A4tter/014801%20PP%20Regranulate%20na tural%20Sinox%20Polymers%20MFI%206-8%20Dat asheet.pdf&cid=8699 | 1,3,6,8, 10-15 | |
| A | * the whole document * | 2,4,5,7, 9 | |

- - - - -

TECHNICAL FIELDS
SEARCHED      (IPC)

The present search report has been drawn up for all claims

| Place of search | Date of completion of the search | Examiner |
|---|---|---|
| Munich | 28 August 2024 | Ritter, Nicola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 24 16 7164

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | Publication date | Patent family member(s) | | Publication date |
|---|---|---|---|---|
| US 2023227642 A1 | 20-07-2023 | CN | 115485141 A | 16-12-2022 |
| | | EP | 3912810 A1 | 24-11-2021 |
| | | US | 2023227642 A1 | 20-07-2023 |
| | | WO | 2021233771 A1 | 25-11-2021 |
| US 2018237564 A1 | 23-08-2018 | BR | 112018002401 A2 | 18-09-2018 |
| | | CN | 107922644 A | 17-04-2018 |
| | | EP | 3331940 A1 | 13-06-2018 |
| | | ES | 2731355 T3 | 15-11-2019 |
| | | JP | 6490870 B2 | 27-03-2019 |
| | | JP | 2018522130 A | 09-08-2018 |
| | | KR | 20180023006 A | 06-03-2018 |
| | | PL | 3331940 T3 | 29-11-2019 |
| | | RU | 2659964 C1 | 04-07-2018 |
| | | TR | 201910965 T4 | 21-08-2019 |
| | | US | 2018237564 A1 | 23-08-2018 |
| | | WO | 2017021136 A1 | 09-02-2017 |

EPO FORM P0459

For more details about this annex : see Official Journal of the European Patent Office, No. 12/82

**EP 4 624 526 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23200103 A
- WO 2016066446 A1

**Non-patent literature cited in the description**

- *Waste Management*, 2022, vol. 153, 41-51
- *Resources, Conservation & Recycling*, 2024, vol. 200, 107299
- **HANS ZWEIFEL**. Plastic Additives Handbook. 2001, 871-873
- **LJILJANA JEREMIC** ; **ANDREAS ALBRECHT** ; **MARTINA SANDHOLZER** ; **MARKUS GAHLEITNER**. Rapid characterization of high-impact ethylene propylene copolymer composition by crystallization extraction separation: comparability to standard separation methods. *International Journal of Polymer Analysis and Characterization*, 2020, vol. 25 (8), 581-596
- **SIGNORET**. Alterations of plastic spectra in MIR and the potential impacts on identification towards recycling. *Resources, conservation and Recycling journal*, 2020, vol. 161
- *Waste management*, 2022, vol. 153, 41-51